# EUROPEAN PATENT APPLICATION

(11) **EP 3 173 934 A1**
(43) Date of publication of application: **31.05.2017**
(21) Application number: 15825032.4
(22) Date of filing: 17.07.2015
(51) Int. Cl.: G06F 13/00

(54) **CONTROL SYSTEM, COMMUNICATION TERMINAL, COMMUNICATION SYSTEM, CONTROL METHOD, AND PROGRAM**

(30) Priority: 22.07.2014 JP 2014148401; 14.04.2015 JP 2015082583
(71) Applicant: Ricoh Company, Ltd., Tokyo 143-8555 (JP)
(72) Inventor: KATO, Yoshinaga, Tokyo 143-8555 (JP)
(74) Representative: Schwabe - Sandmair - Marx
(86) International application number: PCT/JP2015/070614
(87) International publication number: WO 2016/013530

(57) **Abstract**

A control system includes a session controller configured to establish a communications session between a first communications terminal and communications terminals differing from the first communications terminal. The session controller controls establishment of a communications session between the first communications terminal and second communications terminals serving as a first destination in response to a communications start request for starting communications based on a first application running on the first communications terminal. The session controller controls establishment of a communications session between the first communications terminal and third communications terminals serving as a second destination in response to a communications start request for starting communications based on a second application running on the first communications terminal.

## Description

### [Technical Field]

The disclosures discussed herein relate to a control system, a communications terminal, a communications system, a control method, and a program.

### [Background Art]

Communications systems that implement videoconferencing and telephone calling through communication networks including the Internet, leased lines, etc., have been widely used along with a request for reduction in cost and time of people's business travels. Such communications systems may allow terminals of users to transmit or receive content data such as image data and audio data between the terminals to start communications between the terminals, thereby implementing videoconferencing or telephone calls.

Further, the communications system for use in videoconferencing may register multiple destinations in advance to allow the users to select a desired one of the destinations to start videoconferencing with a desired counterpart (see Patent Document 1).

The above-described technology allows users to omit a burdensome operation to input desired destinations; however, the users may still need to select a desired destination from a large number of destinations as the number of registered destinations increases. In order to facilitate users' selecting operations of the desired destination, the communications systems such as mobile phones may employ a technology of grouping, sorting, and searching for destinations registered in an address book.

### [Related-Art Document]

### [Patent Document]

[Patent Document 1] Japanese Unexamined Patent Application Publication No. 2012-191598

### [Summary of the Invention]

### [Problem to be Solved by Invention]

However, the related art technology may still require a search for a desired one of the destinations from a large number of destinations for starting the telephone communications even if grouping, sorting, and searching for the desired destination has facilitated the selection of the desired destination. Hence, the communications terminal that requests starting the communications may have increased burdens due to processing in the related art technology.

### [Means to Solve the Problem]

According to an aspect of the disclosure, a control system is provided. The control system includes a session controller configured to establish a communications session between a first communications terminal and communications terminals differing from the first communications terminal. The session controller controls establishment of a communications session between the first communications terminal and second communications terminals serving as a first destination in response to a communications start request for starting communications based on a first application running on the first communications terminal. The session controller controls establishment of a communications session between the first communications terminal and third communications terminals serving as a second destination in response to a communications start request for starting communications based on a second application running on the first communications terminal.

### [Advantageous Effect of the Invention]

According to an aspect of the disclosure, it is possible to reduce burdens of processing on a communications terminal serving as a request source terminal that requests starting communications between communications terminals for starting the communications between the communications terminals.

### [Brief Description of Drawings]

FIG. 1 is a schematic diagram illustrating a communications system according to an embodiment;
FIG. 2 is an external view illustrating a terminal according to an embodiment;
FIG. 3 is a hardware configuration diagram illustrating a terminal according to an embodiment;
FIG. 4 is a hardware configuration diagram illustrating a management system, a relay apparatus, a program providing system, and a maintenance system according to an embodiment;
FIG. 5 is a software configuration diagram illustrating a terminal according to an embodiment;
FIG. 6 is a functional block diagram illustrating a management system and one of the terminals constructing a communications system according to an embodiment;
FIG. 7 is a conceptual diagram illustrating a visual information management table;
FIG. 8A is a conceptual diagram illustrating an authentication management table;
FIG. 8B is a conceptual diagram illustrating a terminal management table;
FIG. 8C is a conceptual diagram illustrating an application availability management table;
FIG. 8D is a conceptual diagram illustrating a destination list management table;
FIG. 8E is a conceptual diagram illustrating a session management table;
FIG. 9A is a conceptual diagram illustrating a status change management table;
FIG. 9B is another conceptual diagram illustrating the status change management table;
FIG. 9C is a conceptual diagram illustrating a group information management table;
FIG. 9D is a conceptual diagram illustrating a group status management table;
FIG. 9E is a conceptual diagram illustrating a standby information management table;
FIG. 10A is a status transition diagram illustrating communications status transitions implemented by status change rules;
FIG. 10B is another status transition diagram illustrating communications status transitions implemented by status change rules;
FIG. 11 is a conceptual diagram illustrating transmitting and receiving statuses of content data and various types of management information in the communications system;
FIG. 12 is a sequence diagram illustrating an application list displaying process;
FIG. 13 is a diagram illustrating a screen example of an application list;
FIG. 14 is a sequence diagram illustrating a destination list displaying process;
FIG. 15 is a diagram illustrating a display example of a destination list;
FIG. 16 is a sequence diagram illustrating a process of requesting starting communications;
FIG. 17 is another sequence diagram illustrating the process of requesting starting communications;
FIG. 18 is a diagram illustrating a reception screen;
FIG. 19 is a flowchart illustrating a process of determining a terminal to be called;
FIG. 20 is a flowchart illustrating a process of updating an operating status of a group;
FIG. 21 is a diagram illustrating an example of a screen to be displayed during a conference;
FIG. 22 is a flowchart illustrating a process of reporting a standby status;
FIG. 23 is a diagram illustrating a display example of a display;
FIG. 24 is a sequence diagram illustrating a process of attending a content data session; and
FIG. 25 is a flowchart illustrating a determination process of determining attendance based on a communications status.

### [Mode for Carrying Out the Invention]

The following illustrates an embodiment of the present invention with reference to accompanying drawings. In the following description, a "communications terminal" may be referred to simply as a "terminal", and a "communications management system" may be referred to simply as a "management system".

### OVERALL CONFIGURATION OF COMMUNICATIONS SYSTEM 1

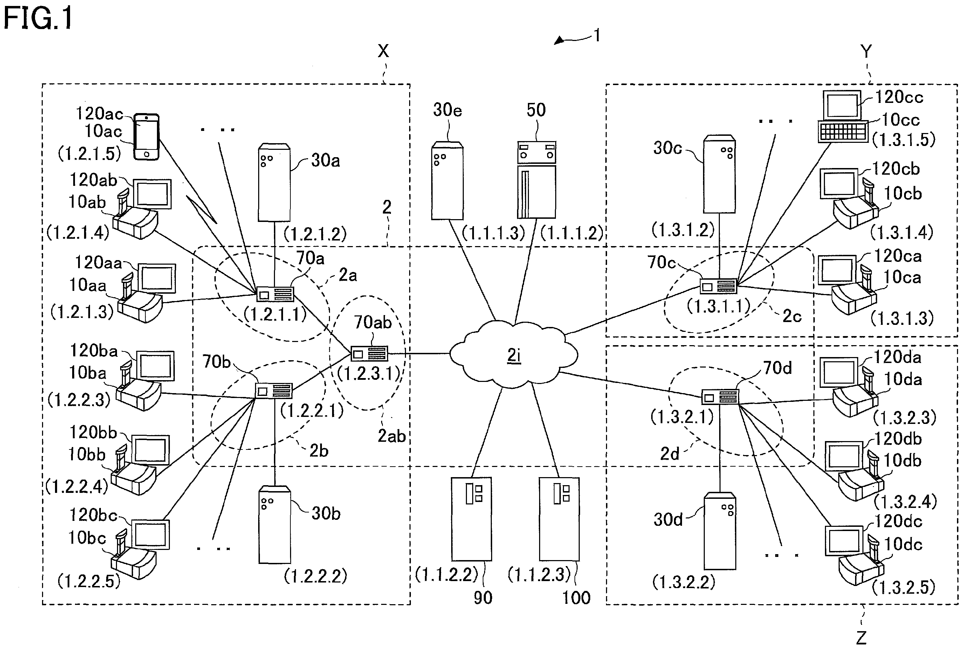

FIG. 1 is a schematic diagram illustrating a communications system according to an embodiment. The communications system 1 is configured to include two or more terminals (10aa, 10ab, ......), respective displays (120aa, 120ab, ......) of the terminals (10aa, 10ab, ......), two or more relay apparatuses (30a, 30b, 30c, 30d and 30e), a management system 50, a program providing system 90, and a maintenance system 100. The communications system 1 may be able to implement videoconferencing or the like between remote locations by communicating image data and sound data as examples of content data. Note that two or more routers (70a, 70b, 70c, 70d and 70ab) are configured to select an optimal one of routes for the content data.

The terminals (10aa, 10ab, 10ac, ......), the relay apparatus 30a, and the router 70a are coupled to one another via a LAN 2a such that the terminals (10aa, 10ab, 10ac, ......), the relay apparatus 30a, and the router 70a may be able to perform communications with one another. The terminals (10ba, 10bb, 10bc, ......), the relay apparatus 30b, and the router 70b are coupled to one another via a LAN 2b such that the terminals (10ba, 10bb, 10bc, ......), the relay apparatus 30b, and the router 70b may be able to perform communications with one another. The LAN 2a and LAN 2b are coupled via a leased line 2ab including a router 70ab to perform communications with one another. The LAN 2a and LAN 2b and leased line 2ab are constructed within a predetermined area X. Note that the above-described apparatuses are not necessarily coupled via the leased line but may be coupled directly to the Internet, for example.

The terminals (10ca, 10cb, 10cc, ......), the relay apparatus 30c, and the router 70c are coupled to one another via a LAN 2c such that the terminals (10ca, 10cb, 10cc, ......), the relay apparatus 30c, and the router 70c may be able to perform communications with one another. The LAN 2 is constructed within a predetermined area Y.

The terminals (10da, 10dd, 10dc, ......), the relay apparatus 30d, and the router 70d are coupled to one another via a LAN 2d such that the terminals (10da, 10dd, 10dc, ......), the relay apparatus 30d, and the router 70d may be able to perform communications with one another. The LAN 2d is constructed within a predetermined area Z. The areas X, Y, and Z may be situated within the same country or may be situated in different countries.

The areas X, Y, and Z are coupled via the Internet 2i from the routers 70ab, 70c and 70d, respectively, such that the areas X, Y, and Z may be able to perform communications with one another. Note that the area Z includes a call center. The terminals 10 may be coupled to call center terminals (10da, 10db, 10dc, ......) so as to receive a reception service.

In the following description, any one of the terminals (10aa, 10ab, ......) is referred to as a "terminal 10", any one of the displays (120aa, 120ab, ......) is referred to as a "display 120", and any one of the relay apparatuses (30a, 30b, 30c, 30d and 30e) is referred to as a "relay apparatus 30". Note also that, any one of the routers (70a, 70b, 70c, 70d and 70ab) is referred to as a "router 70".

The management system 50, the program providing system 90, and the maintenance system 100 are coupled to the Internet 2i. The management system 50, the program providing system 90, and the maintenance system 100 may be installed in the areas X, Y, and Z, or may be installed in areas other than the areas X, Y, and Z.

Note that the LANs (2a, 2b, 2c and 2d), the leased line 2ab, and the Internet 2i form a communications network 2 of the embodiment. The communications network 2 not only includes wired communications but partially includes wireless communications such as Wireless Fidelity (WiFi), Bluetooth (registered trademark), and mobile telephone networks.

In FIG. 1, a combination of four numbers provided beneath each of the terminal 10, the relay apparatus 30, the management system 50, the router 70, the program providing system 90, and the maintenance system 100 simply represents an IP address of a general IPv4. The IP address may be IPv6 instead of IPv4; however, the IPv4 is employed in this specification for simplifying the illustration.

The terminals 10 enables, upon activation of the later-described application, communications between users by transmitting and receiving content data including sound data and image data. The terminals 10 are configured to transmit and receive communications data utilizing predetermined communications systems including a call control system for coupling to and decoupling from a communications destination and an encoding system for IP packeting the communications data. Note that in the following description, application software may be called an "application" or "applications".

Examples of the call control system include (1) the session initiation protocol (SIP), (2) H.323, (3) an extended SIP protocol, (4) instant messaging protocols and (5) SIP for instant messaging, (6) Internet Relay Chat (IRC) protocol, and (7) extended instant messaging protocols. Among the above-described protocols, (4) the instant messaging protocols may be (4-) Extensible messaging and presence protocol (XMPP), or (4-2) protocols for use in ICQ (registered trademark), AIM (registered trademark), or Skype (registered trademark). In addition, (7) the extended instant messaging protocols may be Jingle.

### HARDWARE CONFIGURATION OF EMBODIMENT

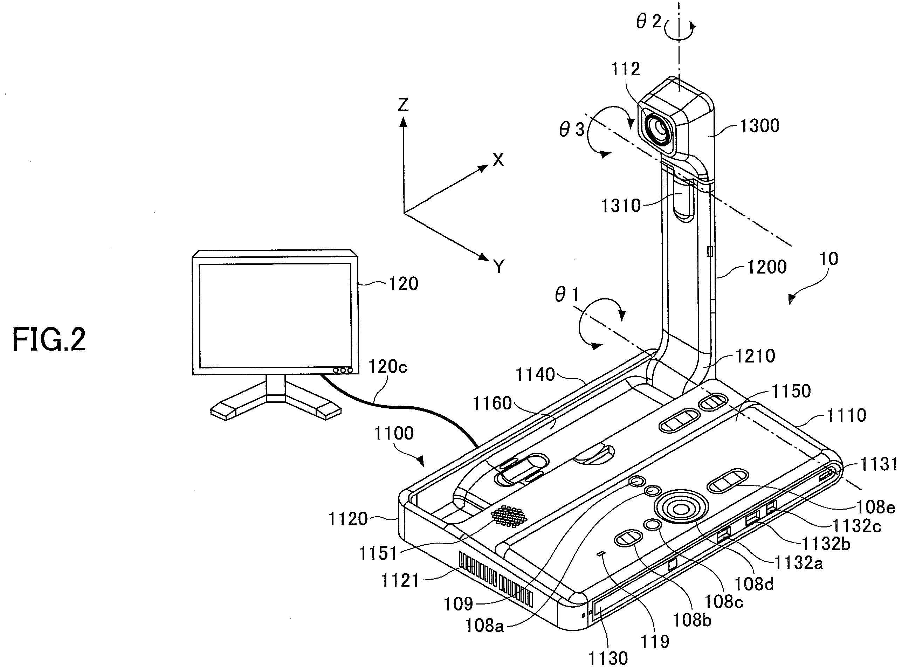

The following describes hardware configurations of the embodiment. FIG. 2 is an external view illustrating a terminal 10 according to an embodiment. The terminal 10 includes, as illustrated in FIG. 2, a housing 1100, an arm 1200, and a camera housing 1300. The housing 1100 includes a not-illustrated suction surface formed of multiple suction holes in a front wall 1110 of the housing 1100, and a rear wall 1120 having an emission surface 1121 formed of multiple emission holes. The housing 1100 having the above-described configuration may be able to drive a built-in cooling fan in the housing 1100 to suction external air from a front side of the terminal 10 via the not-illustrated suction surface and to emit air via the emission surface 1121 to the rear side of the terminal 10. The housing 1100 includes a sound-pickup hole 1131 in a right wall 1130 of the housing 1100 such that voice, sound, noise, and the like may be picked up from a later-described built-in microphone 114 via the sound-pickup hole 1131.

The housing 1100 includes an operations panel 1150 on a right wall 1130 side of the housing 1100. The operations panel 1150 includes later-described operations buttons (108a to 108e), a later-described power switch 109, a later-described alarm lamp 119, and a sound output surface 1151 formed of sound output holes for outputting sound from a later-described built-in speaker 115. The housing 1100 further includes a holder 1160 configured to house the arm 1200 and the camera housing 1300 as a recess part in a left wall 1140 side of the housing 1100. The housing 1100 includes multiple connector ports (1132a to 1132c) for electrically coupling cables with respect to a later-described external apparatus coupling I/F 118. The housing 1100 includes a not-illustrated coupling port in a left wall 1140 of the housing 1100 for electrically coupling a cable 120c of a display 120 to the later-described external apparatus coupling I/F 118.

Note that in the following description, an "operations button 108" indicates any one of the operations buttons (108a to 108e), and an "coupling port 1132" indicates any one of the coupling ports (1132a to 1132c).

Next, the arm 1200 is attached to the housing 1100 via a torque hinge 1210 to allow the arm 1200 to turn in a vertical direction (upward and downward directions) within a 135 degree range of a tilt angle θ1 with respect to the housing 1100. FIG. 2 illustrates an example of the tilt angle θ1 being 90 degrees. The camera housing 1300 includes a later-described built-in camera 112 configured to image users, documents, rooms, and the like. The camera housing 1300 also includes a torque hinge 1310. The camera housing 1300 is attached to the arm 1200 via the torque hinge 1310. The camera housing 1300 is configured to turn in a horizontal direction by ±180 degrees within a range of a pan angle θ2 from 0 degrees being the camera housing 1300 illustrated in FIG. 2 with respect to the arm 1200 and turn in a vertical direction by ±45 degrees within a range of a tilt angle θ3.

Note that the external view of the terminal 10 illustrated in FIG. 2 is only an example, and the external view is thus not limited to this example. For example, the terminal 10 may be a general purpose computer, a mobile terminal, a projector, an electronic whiteboard, digital signage, and the like (see terminals (10ac and 10cc) of FIG. 1). When a computer used as the terminal 10 does not include a microphone or a camera, an externally provided microphone or an externally provided camera may be coupled to the computer. When the terminal 10 is a general purpose computer or a mobile phone terminal, the terminal 10 may be coupled to the Internet 2i via wireless communications by a wireless LAN or a mobile phone network. Further, when the general-purpose computer is used as the terminal 10, the terminal 10 may install application programs (hereinafter called "applications") for causing the computer to execute processes of the terminal 10.

Note that external views of the relay apparatus 30, the management system 50, the program providing system 90, and the maintenance system 100 may be similar to external views of general server computers, and a duplicated illustration of the external views of the relay apparatus 30, the management system 50, the program providing system 900, and the maintenance system 100 are omitted from the description.

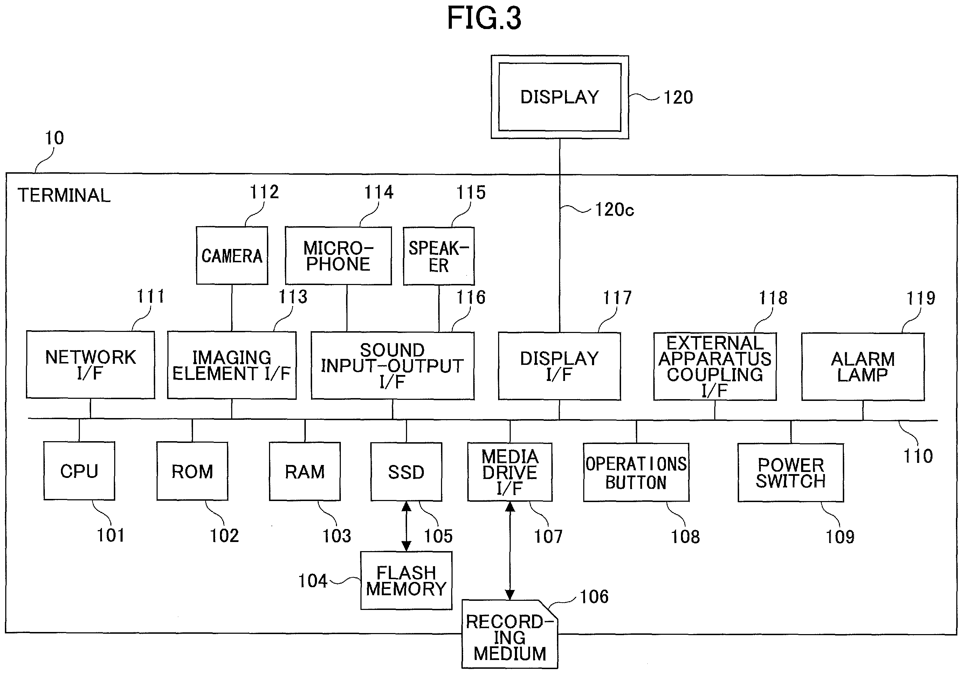

FIG. 3 is a hardware configuration diagram of the terminal 10 according to an embodiment. The terminal 10 includes a central processing unit (CPU) 101 configured to control overall operations of the terminal 10, a read only memory (ROM) 102 storing programs for driving the CPU 101 such as initial program loader (IPL), a random access memory (RAM) 103 serving as a work area of the CPU 101, a flash memory 104 storing various types of data such as terminal programs, image data and sound data, a solid state drive (SDD) 105 configured to control reading or writing various types of data with respect to the flash memory 104 based on the control of the CPU 101, a media drive 107 configured to control reading or writing (storing) data with respect to a recording medium 106 such as a flash memory and an integrated circuit (IC) card, an operations button 108 configured to be operated for selecting a destination for the terminal 10, a power switch 109 configured to switch ON/OFF the power supply of the terminal 10, and a network interface (I/F) 111 for transmitting data using the communications network 2.

The terminal 10 further includes a built-in camera 112 configured to image a subject to acquire image data in accordance with the control of the CPU 101, an imaging element I/F 113 configured to control the drive of the camera 112, a built-in microphone 114 configured to collect sound, a built-in speaker 115 configured to output sound, a sound input I/F 116 configured to process input sound signals and output sound signals between the microphone 114 and the speaker 115 in accordance with the control of the CPU 101, a display I/F 117 configured to transmit image data to an externally attached display 120 in accordance with the control of the CPU 101, an external apparatus coupling I/F 118 for coupling various types of external apparatuses, an alarm lamp 119 configured to report abnormalities of various functions of the terminal 10, and a bus line 110 such as an address bus or a data bus for electrically coupling the above-described components illustrated in FIG. 3.

The display 120 serves as a display part configured to display images or the like of a subject. An example of the display 120 includes a liquid crystal display or an organic electroluminescence display. The display 120 is coupled to the display I/F 117 via a cable 120c. The cable 120c may be an analog RGB (VGA) signal-specific cable, a component video-specific cable, a high-definition multimedia interface (HDMI) (registered trademark) or a digital video interactive (DVI) signal-specific cable.

The camera 112 includes lenses or a solid-state image sensor configured to convert light capturing a subject into electric charges to transform an image (video) of the subject into electronic data. Examples of the solid-state image sensor include a complementary metal oxide semiconductor (CMOS) or a charge coupled device (CCD).

External apparatuses such as an externally provided camera, an externally provided microphone, and an externally provided speaker may be electrically coupled to the external apparatus coupling I/F 118 via a universal serial bus (USB) cable or the like inserted in a connector port 1132 of the housing 1100 of the terminal 10. When the externally provided camera is coupled to the external apparatus coupling I/F 181, the externally provided camera is driven in preference to the built-in camera 112 in accordance with the control of the CPU 101. Similarly, when the externally provided microphone or the externally provided speaker is coupled to the external apparatus coupling I/F 181, the externally provided microphone or the externally provided speaker coupled to the external apparatus coupling I/F 181 is driven in preference to a corresponding one of the built-in microphone 114 and the built-in speaker 115 in accordance with the control of the CPU 101.

Note that the recording medium 106 is configured to be removable from the terminal 10. Further, when the recording medium 106 is a nonvolatile memory configured to read or write data in accordance with the control of the CPU 101, such a nonvolatile memory used as the medium 106 is not limited to the flash memory 104. The nonvolatile memory used as the medium 106 may be an electrically erasable and programmable ROM (EEPROM), or the like.

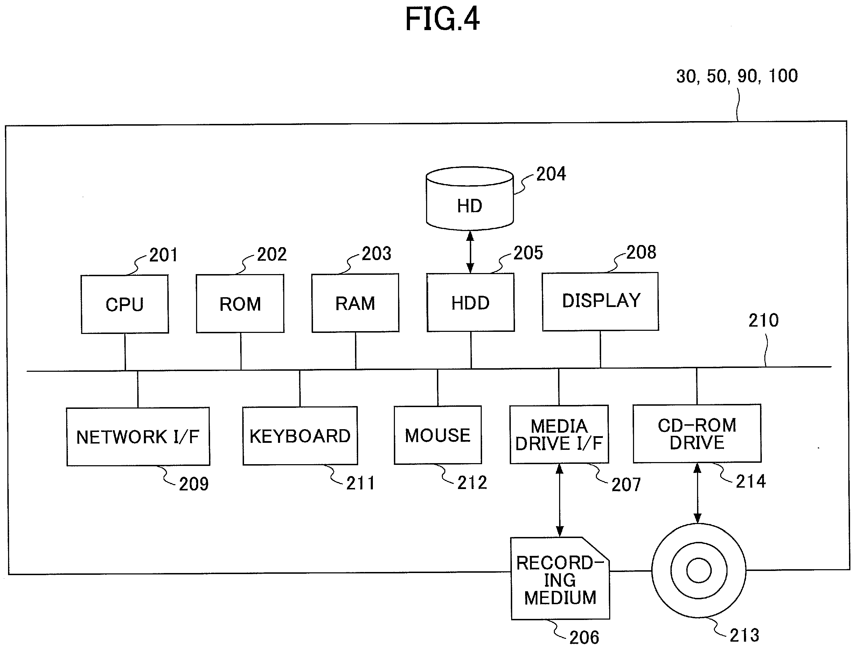

FIG. 4 is a hardware configuration diagram of the management system 50 according to an embodiment. The management system 50 includes a CPU 201 configured to control overall operations of the management system 50, a ROM 202 configured to store a program for use in driving the CPU 201 such as an IPL, a RAM 203 configured to serve as a work area of the CPU 201, an HD 204 configured to store various types of data specific to the management system 50, a hard disk drive (HDD) 205 configured to control reading or writing the data with respect to the HD 204 in accordance of the control of the CPU 201, a media I/F 207 configured to control reading or writing (storing) data with respect to a recording medium 206 such as flash memory or the like, a display 208 configured to display various types of information such as a cursor, menus, windows, characters, or images, a network I/F 209 configured to perform data communications using the communications network 2, a keyboard 211 provided with multiple keys for inputting characters, numeric values, various types of instructions and the like, a mouse 212 configured to select or execute various types of instructions, select a process target and move a cursor, a CD-ROM drive 214 configured to control reading or writing data with respect to a compact disc read only memory (CD-ROM) 213 as an example of a removable recording medium, and a bus line 210 such as an address bus or a data bus for electrically coupling the above-described components as illustrated in FIG. 4.

The relay apparatus 30, the program providing system 90 and the maintenance system 100 have a hardware configuration similar to the hardware configuration of the management system 50, and hence, a duplicated illustration of the relay apparatus 30, the program providing system 90 and the maintenance system 100 is omitted from the description.

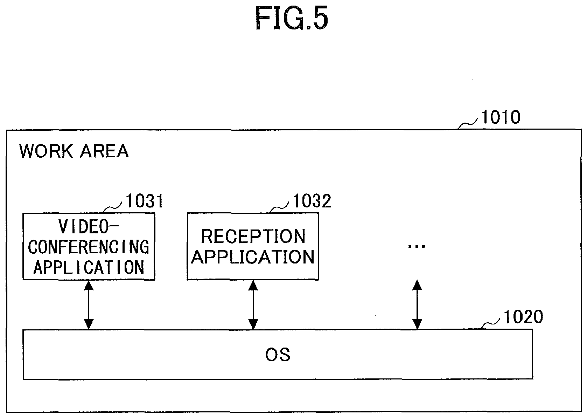

FIG. 5 is a software configuration diagram of the terminal 10 according to an embodiment. As illustrated in FIG. 5, an OS 1020, a videoconferencing application 1031, and a reception application 1032 operate on a work area 1010 of the RAM 103. The OS 1020, the videoconferencing application 1031 and the reception application 1032 are installed on the terminal 10.

The OS 1020 provides basic functions to serve as basic software to manage the overall terminal 10. The videoconferencing application 1031 is configured to couple the terminal 10 to another terminal 10 to conduct videoconferencing. The reception application 1032 is configured to couple the terminal 10 to a call center terminal 10 to allow a user of the terminal 10 to talk to an operator.

The above-described applications are only examples and other applications may also be installed on the terminal 10. Other applications may be stored in the program providing system 90, and these applications may be downloaded from the program providing system 90 in response to a request from the terminal 10. To install multiple videoconferencing applications in the terminal 10, the videoconferencing applications having different protocols may be installed in the terminal 10, as (1) to (7) noted above.

### FUNCTIONAL CONFIGURATIONS OF EMBODIMENT

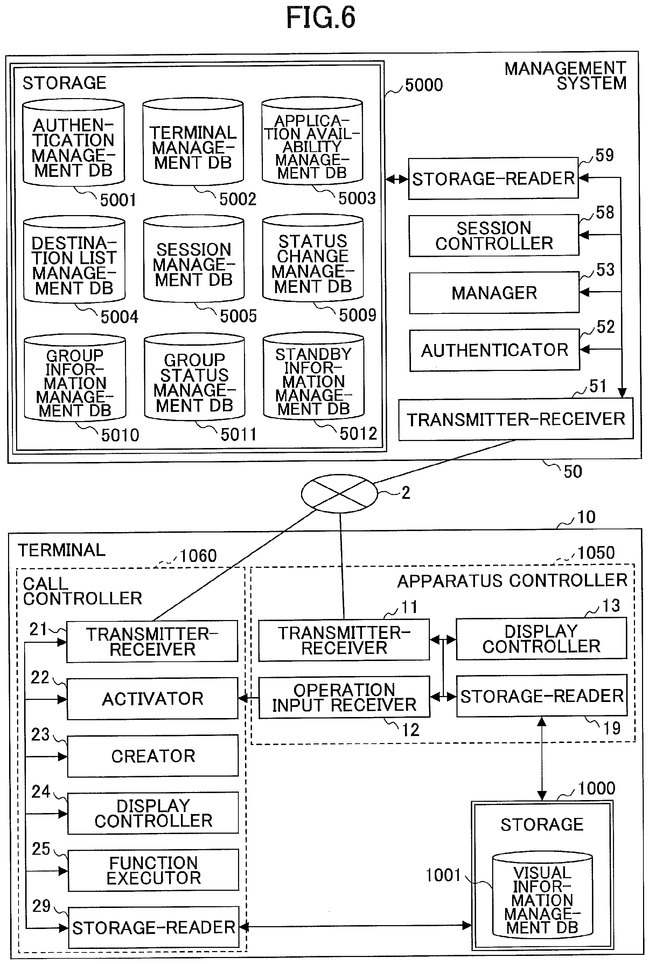

The following describes functional configurations of the communications system 1 according to the embodiment. FIG. 6 is a functional block diagram illustrating a configuration of the terminal 10 and a configuration of the management system 50 that partially form the communications system 1 of the embodiment. In FIG. 6, the terminal 10, and the management system 50 are coupled via the communications network 2 to perform data communications with each other.

### FUNCTIONAL CONFIGURATION OF TERMINAL

The terminal 10 includes an apparatus controller 1050 and a call controller 1060. The apparatus controller 1050 may be implemented by the execution of the OS 1020. The call controller 1060 may be implemented by the activation of the videoconferencing application 1031 or the reception application 1032.

The apparatus controller 1050 includes a transmitter-receiver 11, an operation input receiver 12, a display controller 13, and a storage-reader 19. The above-described components are functions implemented by causing any one of the components illustrated in FIG. 3 to execute instructions from the CPU 101 in accordance with the terminal programs loaded from the flash memory 104 in the RAM 103.

The call controller 1060 includes a transmitter-receiver 21, an activator 22, a creator 23, a display controller 24, a function executor 25, and a storage-reader 29. The above-described components are functions implemented by causing any one of the components illustrated in FIG. 3 to execute instructions from the CPU 101 in accordance with the videoconferencing application 1031 or the reception application 1032 (programs) loaded from the flash memory 104 in the RAM 103.

The terminal 10 includes a storage 1000 formed of the ROM 102, the RAM 103, and the flash memory 104 illustrated in FIG. 3. The storage 1000 stores a visual information management database (DB) 1001 formed of a later-described visual information management table.

### VISUAL INFORMATION MANAGEMENT TABLE

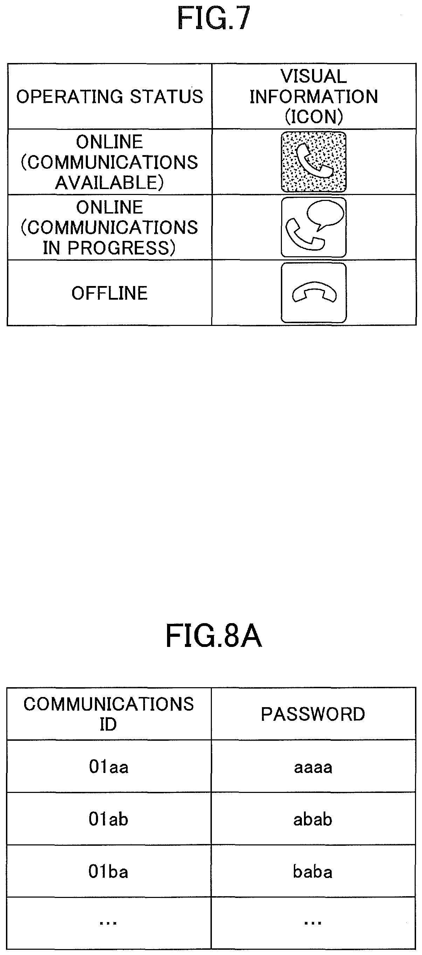

FIG. 7 is a conceptual diagram illustrating a visual information management table. The visual information management table is configured to manage operating statuses of the terminals 10 in association with operating status icon data presented as visual information on the destination list displayed on the display 120. Various types of icons illustrated in FIG. 7 may represent examples of the operating status icons. The operating status includes an ONLINE (communication capable), ONLINE (communications in progress), and OFFLINE.

### FUNCTIONAL CONFIGURATION OF APPARATUS CONTROLLER

The following describes functional configurations of the apparatus controller 1050 of the terminal 10. Note that the illustration given below also includes a relationship between the main components among those components illustrated in FIG. 3 and the apparatus controller 1050 for implementing the respective functional configurations of the apparatus controller 1050 of the terminal 10.

The transmitter-receiver 11 is implemented by instructions from the CPU 101 and the network I/F 111, and configured to perform transmission and reception of various types of data (or information) with communications counterpart terminals, apparatuses, or systems via the communications network 2.

The operation input receiver 12 is implemented by instructions from the CPU 101, and operations buttons (108a, 108b, 108c, 108d and 108e) and the power switch 109, and is configured to receive various types of inputs or various types of selections made by the user.

The display controller 13 is implemented by instructions from the CPU 101 and the display I/F 117, and is configured to control display of images on the display 120.

The storage-reader 19 is implemented by instructions from the CPU 101 and the SSD 105, and is configured to store various types of data in the storage 1000 or read various types of data from the storage 1000.

### FUNCTIONAL CONFIGURATION OF COMMUNICATIONS CONTROLLER

The following describes functional configurations of a call controller 1060 of the terminal 10. Note that the illustration given below also includes a relationship between the main components among those components illustrated in FIG. 3 and the call controller 1060 of the terminal 10 for implementing the respective functional configurations of the call controller 1060 of the terminal 10.

The transmitter-receiver 21 is implemented by instructions from the CPU 101 and the network I/F 111, and configured to perform transmission and reception of various types of data (or information) with communications counterpart terminals, apparatuses, or systems via the communications network 2.

The activator 22 is implemented by instructions from the CPU 101, and configured to activate the call controller 1060 (selected one of the videoconferencing application 1031 and the reception application 1032) in response to an activation request from the operation input receiver 12 when the operation input receiver 12 of the apparatus controller 1050 has received one of the applications (the videoconferencing application 1031 and the reception application 1032) selected by the user.

The creator 23 is implemented by instructions from the CPU 101, and configured to create a screen of a destination list by including the above-described operating status icons within a later-described destination list frame.

The display controller 24 is implemented by instructions from the CPU 101 and the display I/F 117, and is configured to control transmission of screen data to the display 120.

The function executor 25 is implemented by instructions from the CPU 101, the camera 112, the microphone 114, the speaker 115 or the like, and configured to control telephone call implementation through images, sound and the like.

The storage-reader 29 is implemented by instructions from the CPU 101 and the SSD 105, and is configured to store various types of data in the storage 1000 or read various types of data from the storage 1000.

### FUNCTIONAL CONFIGURATION OF MANAGEMENT SYSTEM

The management system 50 includes a transmitter-receiver 51, an authenticator 52, a manager 53, a session controller 58, and a storage-reader 59. The above-described components are functions implemented by causing any one of the components illustrated in FIG. 4 to execute instructions from the CPU 201 in accordance with the management system programs loaded from the HD 204 in the RAM 203. The management system 50 includes a storage 5000 composed of the HD 204. The storage 5000 stores application icon data for each of the application IDs. The storage 5000 further includes respective DBs composed of later-described tables.

### AUTHENTICATION MANAGEMENT TABLE

FIG. 8A is a conceptual diagram illustrating an authentication management table. The storage 5000 includes an authentication management DB 5001 composed of an authentication management table illustrated in FIG. 8A. The authentication management table is configured to manage communications IDs of all the terminals 10 managed by the management system 50 in association with respective authentication passwords. Note that the communications ID is information for specifying a communications destination in the communications system 1. Examples of the communications ID may include, but not limited to, identifier information of the terminal 10, a user account of the terminal 10, and group identifier information of a group formed of multiple terminals 10. The following description is based on the assumption in which the communications ID is one of the identifier information of the terminal 10 and group identifier information of the group of the terminals 10.

### TERMINAL MANAGEMENT TABLE

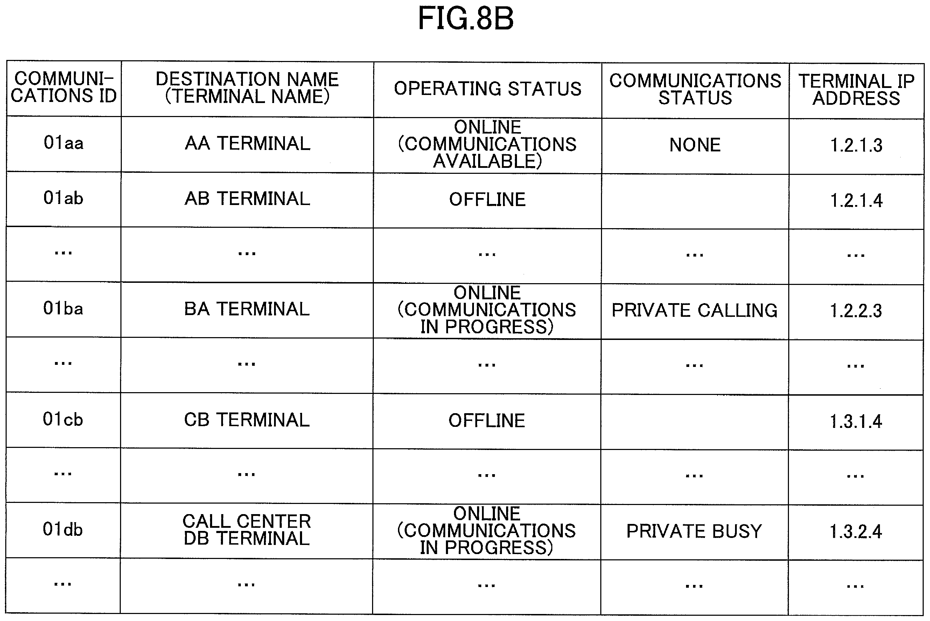

FIG. 8B is a conceptual diagram illustrating a terminal management table. The storage 5000 stores a terminal management DB 5002 composed of the terminal management table illustrated in FIG. 8B. The terminal management table is configured to manage destination names (terminal names) of the terminals 10 serving as destinations, operating statuses of the respective terminals 10, communications statuses indicating statuses of communications between the terminals 10 and counterpart terminals 10, and IP addresses of the terminals 10 in association with respective communications IDs of the terminals 10.

### APPLICATION AVAILABILITY MANAGEMENT TABLE

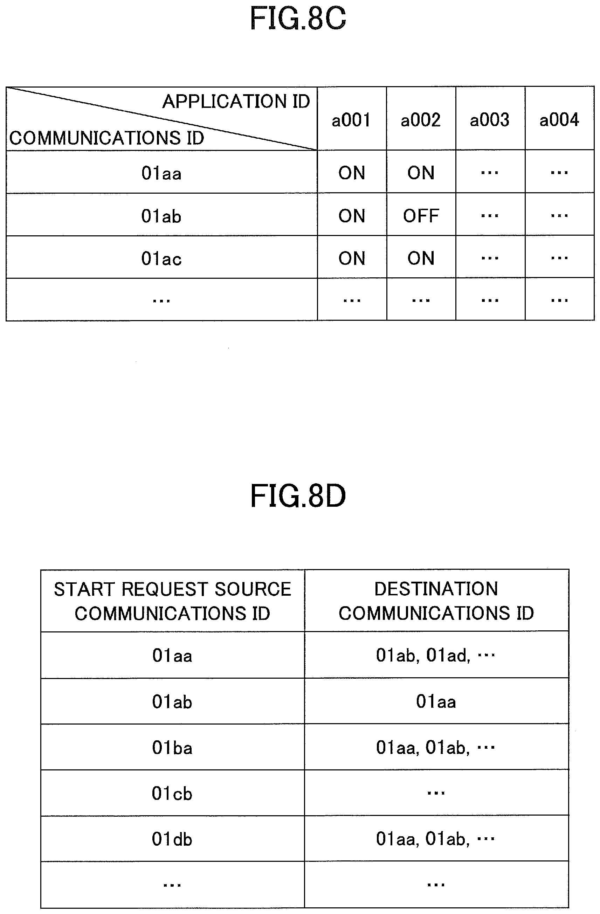

FIG. 8C is a conceptual diagram illustrating an application availability management table. The storage 5000 stores an application availability management DB 5003 composed of the terminal management table illustrated in FIG. 8C. The terminal management table is configured to manage availability information indicating whether each of the applications is available (On) or unavailable (Off) in association with the communications IDs of the terminals 10 and application IDs for identifying respective applications installed in the terminals 10.

### DESTINATION LIST MANAGEMENT TABLE

FIG. 8D is a conceptual diagram illustrating a destination list management table. The storage 5000 includes a destination list management DB 5004 composed of a destination list management table illustrated in FIG. 8D. The destination list management table is configured to manage all the communications IDs of the destination terminals registered as addressable destination terminal candidates in association with the communications ID of the request source terminal that has transmitted a communications start request for starting the communications.

### SESSION MANAGEMENT TABLE

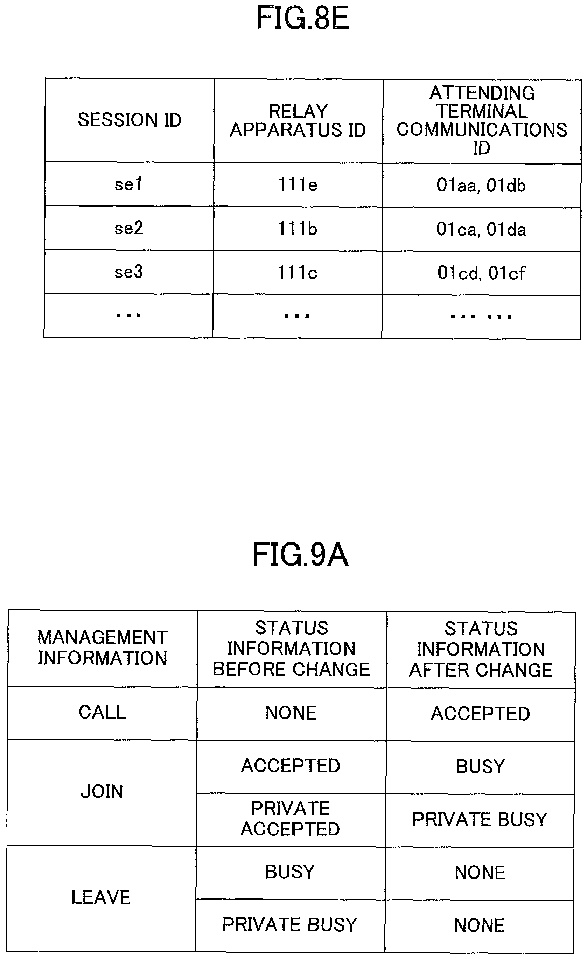

FIG. 8E is a conceptual diagram illustrating a session management table. The storage 5000 includes a session management DB 5005 composed of the session management table illustrated in FIG. 8E. The session management table is configured to manage relay apparatus IDs of the relay apparatuses 30 that relay content data between the terminals 10 in respective sessions, and the communications IDs of the terminals (attending terminals) 10 that attend the sessions in association with respective session IDs for identifying the sessions via which content data are transmitted between the terminals 10.

### STATUS CHANGE QUALITY MANAGEMENT TABLE

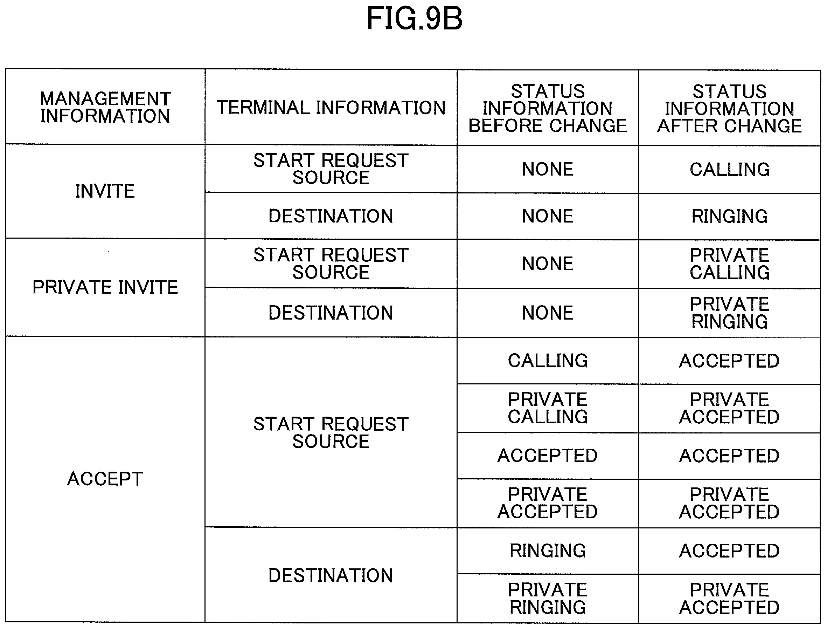

FIGS. 9A and 9B are conceptual diagrams illustrating status change management tables. The storage 5000 stores a status change management DB 5009 composed of the status change management tables illustrated in FIGS. 9A and 9B. The status change management table illustrated in FIG. 9A is configured to manage management information for use in controlling sessions between the terminals 10 in association with pre-change status information indicating communications statuses before execution of control based on the management information and post-change status information indicating communications statuses after execution of control based on the management information. The status change management table illustrated in FIG. 9B is configured to manage the management information in association with terminal information for identifying whether the terminal 10 is a request source terminal or a destination terminal, the pre-change status information, and the post-change status information.

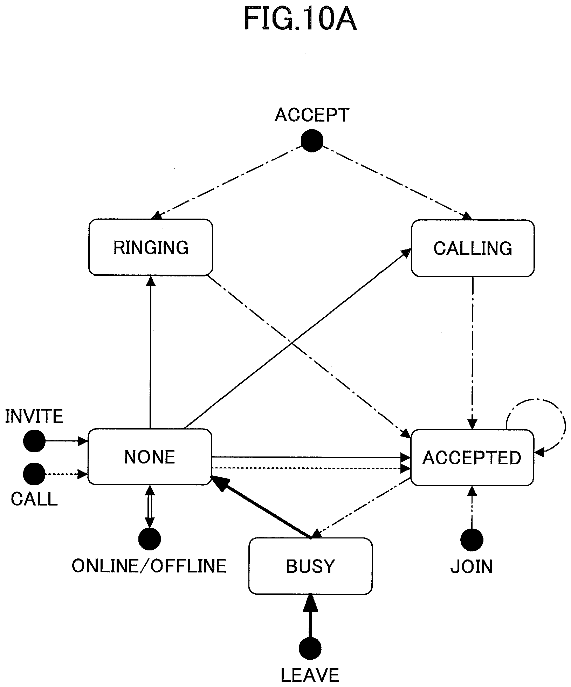

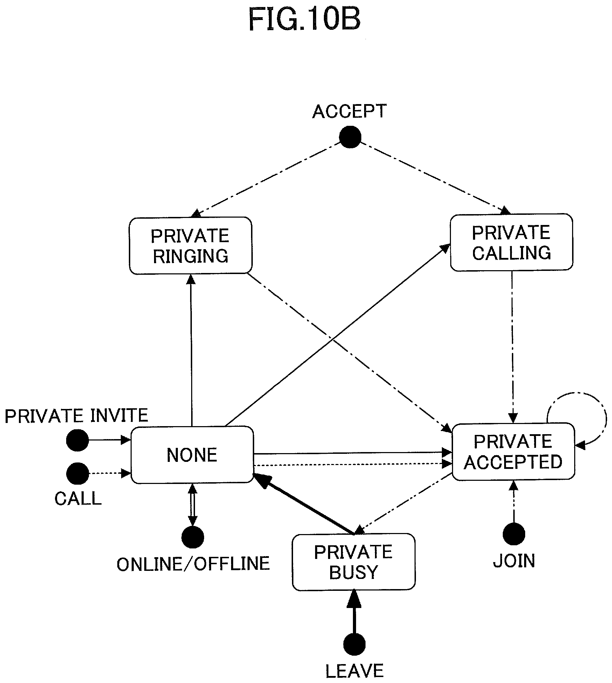

FIGS. 10A and 10B are status transition diagrams illustrating communications status transitions implemented by status change rules recorded in the above-described status change management tables. As illustrated in FIGS. 10A and 10B, a later-described manager 53 may change the communications status of the request source terminal 10 from "None" to "Private Calling" based on the management information "Private Invite", and record the changed communications status in the terminal management table. Likewise, the manager 53 may change the communications status of the destination terminal from "None" to "Private Ringing" based on the management information "Private Invite".

Note that the management information "Invite" corresponds to a communications start request. The management information "Accept" corresponds to an acceptance response to the communications start request. The management information "Join" corresponds to a content data relay request. The management information "Call" corresponds to an attendance request for attending a session that has been established. The management information "Leave" corresponds to a session end request.

### GROUP INFORMATION MANAGEMENT TABLE

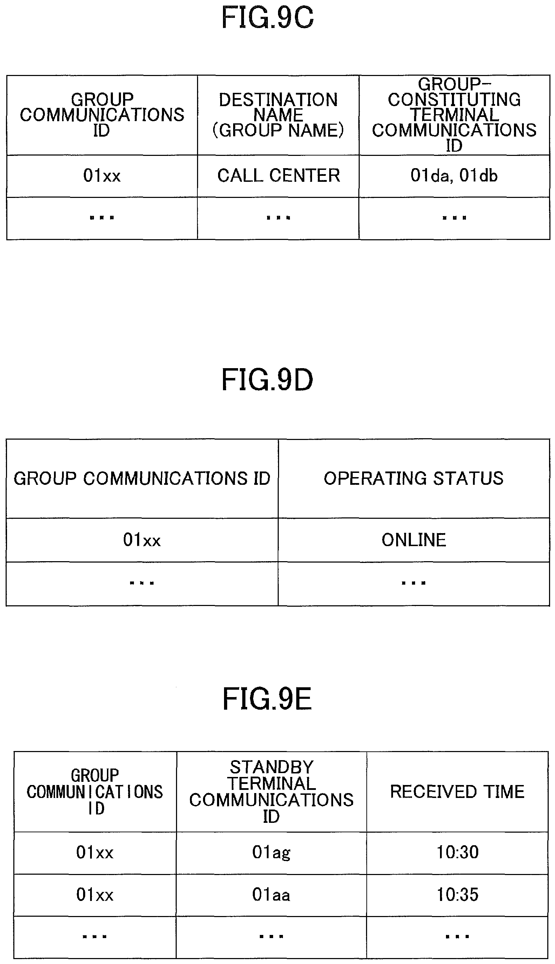

FIG. 9C is a conceptual diagram illustrating a group information management table. The storage 5000 stores a group information management DB 5010 composed of the group information management table illustrated in FIG. 9C. The group information management table is configured to manage group communications IDs for identifying groups in association with destination names (group names) as group destinations and the communications IDs of the terminals (group-constituting terminal) 10 constituting the groups.

### GROUP STATUS MANAGEMENT TABLE

FIG. 9D is a conceptual diagram illustrating a group status management table. The storage 5000 stores a group status management DB 5011 composed of the group status management table illustrated in FIG. 9D. The group status management table is configured to manage the communications IDs of the groups in association with respective group operating statuses of the groups.

### STANDBY INFORMATION MANAGEMENT TABLE

FIG. 9E is a conceptual diagram illustrating a standby information management table. The storage 5000 stores a terminal management DB 5012 composed of the standby information management table illustrated in FIG. 9E. The standby information management table is configured to manage the group communications IDs for identifying the groups in association with a communications ID of a terminal (standby terminal) 10 that stands by communications with the group-constituting terminals 10 and received time at which the management system 50 has received a communications start request for starting communications with the group-constituting terminals 10.

### FUNCTIONAL CONFIGURATION OF MANAGEMENT SYSTEM

The following describes a detailed functional configuration of the management system 50. Note that the following also illustrates a relationship between main components among the components illustrated in FIG. 4 and functions of the management system 50 for implementing the respective functions of the management system 50.

The transmitter-receiver 51 is implemented by instructions from the CPU 201 and the network I/F 209, and configured to perform transmission and reception of various types of data (or information) with communications counterpart terminals, apparatuses, or systems via the communications network 2.

The authenticator 52 is implemented by instructions from the CPU 201, and configured to search the authentication management table by the communications ID and password received by the transmitter-receiver 51, and determine whether the authentication management table includes the communications ID and password identical to the received communications ID and password to authenticate the terminal 10.

The manager 53 is implemented by instructions from the CPU 201, and configured to update the operating statuses, communications statuses, or the like in order to manage the latest operating statuses and communications statuses in the terminal management table (see FIG. 8B) or the group status management table (see FIG. 9D).

The session controller 58 is implemented by instructions from the CPU 201, and configured to control sessions via which content data are transmitted between the terminals 10 based on the instructions from the CPU 201. The control performed by the session controller 58 includes control session establishment, control attendance of the terminal 10 at the established session, control decoupling from the session, and the like.

The storage-reader 59 is implemented by instructions from the CPU 201 and the HDD 205, and is configured to store various types of data in the storage 5000 or extract various types of data from the storage 5000.

### PROCESSES AND OPERATIONS OF COMMUNICATIONS SYSTEM 1

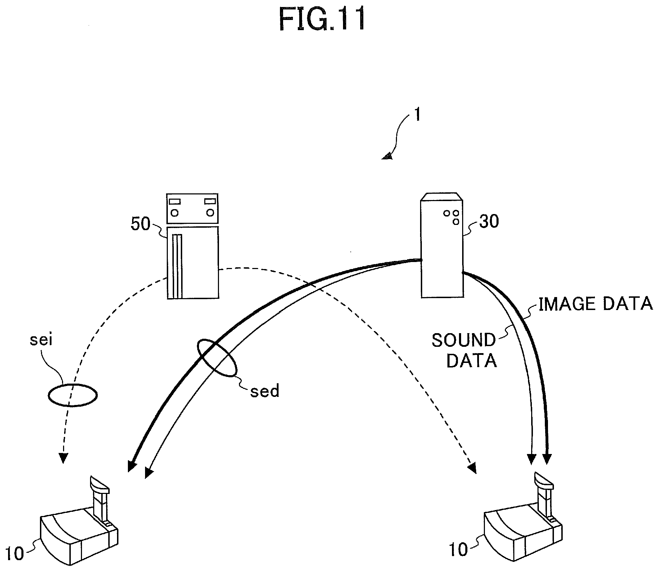

The following illustrates processes and operations in the communications system 1. Initially, a description is given of an outline of the processes and operations in the communications system 1. FIG. 11 is a conceptual diagram illustrating statuses of transmitting and receiving content data and various types of management information in the communications system.

As illustrated in FIG. 11, a management information session sei for transmitting and receiving various types of management information is established between the terminals 10 via the management system 50 or between the terminals 10 and the management system 50 in the communications system 1. Further, sessions for transmitting and receiving content data (image data and sound data) are established between the terminals 10 via the relay apparatus 30. These sessions are integrated as a content data session sed in FIG. 11. That is, the content data session sed is configured to be used in videoconferencing.

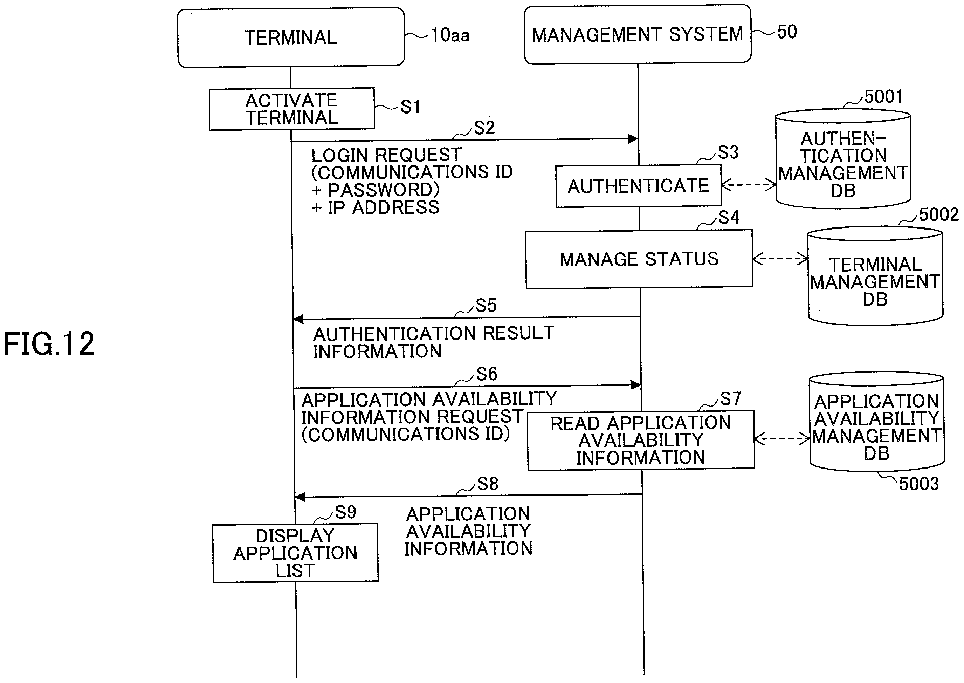

The following illustrates processes and operations in the communications system 1. A description is given of a process from activation of a terminal 10aa to display of an application list on the terminal 10aa with reference to FIG. 12. FIG. 12 is a sequence diagram illustrating a process from activation of the terminal 10 to display of the application list. Note that in FIG. 12, various types of management information are transmitted or received via the management information session sei.

When the user switches the power switch 109 ON, the operation input receiver 12 receives a power ON instruction to activate the terminal 10aa (step S1). The transmitter-receiver 11 transmits a login request to the management system 50 via communications network 2 in response to the reception of the power ON instruction as trigger (step S2). The transmitter-receiver 51 of the management system 50 receives the login request accordingly. This login request includes a communications ID and a password for identifying the terminal 10aa as a login request source terminal. The terminal ID and the password are data that are read from storage 1000 via the storage-reader 19 and transmitted to the transmitter-receiver 11. Note that the terminal ID and the password may be input by a user. Note that the management system 50 serving as a receiver may be able to acquire an IP address of the terminal 10aa serving as a transmitter when the login request is transmitted from the terminal 100aa to the management system 50.

The authenticator 52 of the management system 50 subsequently searches the authentication management table (see FIG. 8A) of the storage 5000 by the communications ID and the password included in the login request as a search key to determine whether the communications ID and the password managed in the authentication management table are identical to the communications ID and the password included in the login request, thereby authenticating the terminal 10aa (step S3). When the authenticator 52 authenticates the login request as a login request being transmitted from a terminal having a valid access right, the manager 53 stores the communications ID "01aa" of the terminal 10aa in association with the operating status "ONLINE (communications available)", the communications status "None", and the IP address of the terminal 10aa in the terminal management table (see FIG. 8B) (step S4).

The transmitter-receiver 51 of the management system 50 then transmits authentication result information indicating an authentication result obtained by the authenticator 52 to the terminal 10aa as a login request source that has transmitted the login request via the communications network 2 (step S25). The transmitter-receiver 11 of the terminal 10aa receives the authentication result information accordingly.

When the authenticator 52 authenticates the terminal 10aa as a terminal having a valid access right, the transmitter-receiver 51 of the terminal 10aa transmits an application availability information request indicating available applications installed in the terminal 10aa to the management system 50 via the communications network 2 (step S6). This application availability information request includes the communications ID of the terminal 10aa as an application availability information request source that has transmitted the application availability information request. The transmitter-receiver 51 of the management system 50 receives the application availability information request accordingly.

Next, the storage-reader 59 of the management system 50 searches the application availability table (see FIG. 8C) by the communications ID of the terminal 10aa as the application availability information request source as a search key and reads a corresponding one of the application availability information pieces (step S7). The application availability information in this case indicates the application ID "a001" being "On", and the application ID "a002" being "On", and the like.

The transmitter-receiver 11 subsequently transmits the application availability information read in step S7 to the terminal 10aa as the application availability information request source via the communications network 2 (step S8). The transmitter-receiver 11 of the terminal 10aa thus receives the application availability information.

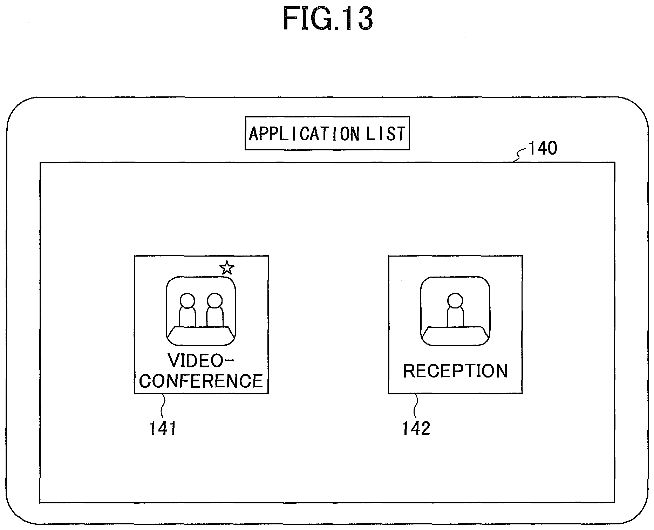

Next, the display controller 13 displays an application list screen 140 (a screen displaying a list of applications) illustrated in FIG. 13 on the display 120aa (step S9). Note that FIG. 13 is a diagram illustrating a screen example of the application list. The application list screen 140 displays application icons (141, 142, ...) in association with all the application IDs (a001, a002, ...) having the application availability information indicating available (On), for each of the application IDs (a001, a002, ...). The display controller 13 may display the application list screen 140 having check boxes for the user of the terminal 10aa to select necessary applications. The application IDs of the applications selected via the check boxes may be managed by any one of storages of the terminal 10aa and the management system 50. Since the user of the terminal 10aa may skip the step of selecting the application when the number of selected applications is one, the time required for stating the communications may be reduced.

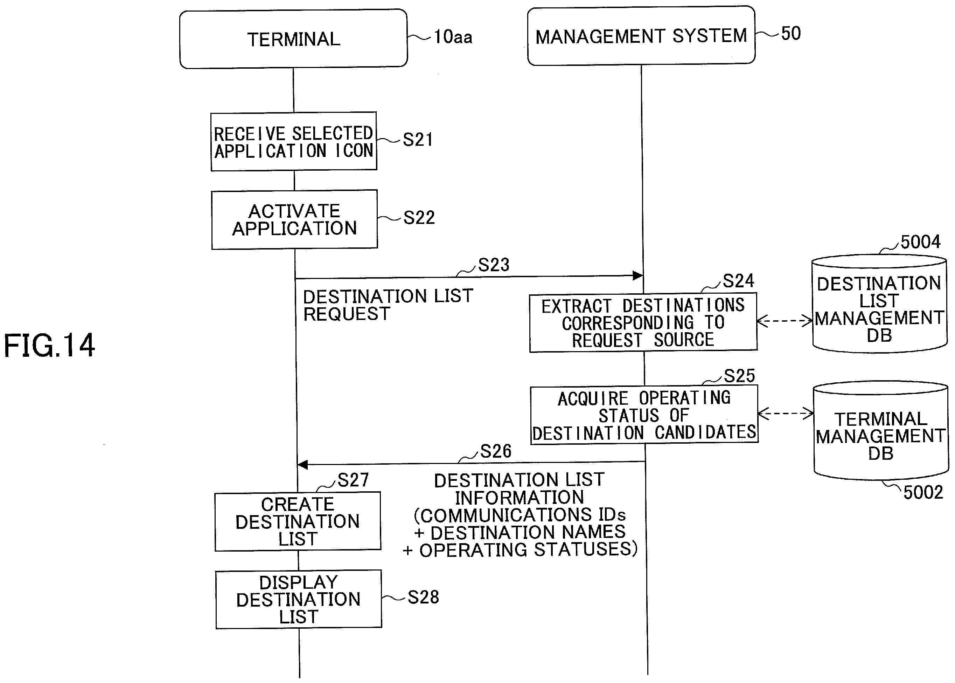

Next, an illustration is given of a process from receiving the selection of an application icon by the terminal 10aa with reference to FIG. 14. Note that FIG. 14 is a sequence diagram illustrating a process from receiving the selection of the application icon to displaying the destination list by the terminal 10.

When the user operates operations buttons (108a to 108e) to select a desired one of the application icons illustrated in FIG. 13, the operation input receiver 12 of the terminal 10aa receives the application icon selected by the user (step S21). In the following description, it is assumed that the user has selected an application icon 141 representing the videoconferencing application 1031 in this case.

Subsequently, the operation input receiver 12 of the apparatus controller 1050 (in the terminal 10aa) transmits an activation request to the activator 22 implemented by the selected videoconferencing application 1031 to activate the call controller 1060 corresponding to the videoconferencing application 1031 (step S22). Note that the process before step S22 is a process performed by the apparatus controller 1050; however, a process subsequent to step S22 is performed by the call controller 1060 implemented by the activation of the videoconferencing application 1031.

The transmitter-receiver 21 of the call controller 1060 in the terminal 10aa transmits a destination list request for a destination list having a list of destination candidates of the terminal 10aa to the management system 50 via the communications network 2 (step S23). The transmitter-receiver 51 of the management system 50 receives the destination list request accordingly. This destination list request includes the communications ID of the terminal 10aa as a destination list request source that has transmitted the destination list request.

The storage-reader 59 of the management system 50 subsequently searches the destination list management table (see FIG. 8D) by the communications ID "01aa" of the terminal 10aa as the destination list request source as a search key and reads the communications IDs ("01ab", "01ad", ...) of the destination terminal candidates 10 that are able to have communications with the terminal 10 as the destination list request source (step S24).

The storage-reader 59 subsequently searches the terminal management table (see FIG. 8B) by the communications IDs ("01ab", "01ad", ...) of the destination candidate terminals 10 read in step S24 and reads corresponding destination names and operating statuses of the destination terminal candidates 10 (step S25).

The transmitter-receiver 51 transmits destination list information to the terminal 10 as the destination list request source via the communications network 2 (step S26). The transmitter-receiver 21 of the terminal 10 as the destination list request source receives the destination list information accordingly. The destination list information includes the communications IDs of the destination candidates read in step S24, and the destination names and the operating statuses read in step S25. The terminal 10aa as the destination list request source may be able to acquire current operating statuses of the destination terminal candidates 10 capable of having communications with the terminal 10aa.

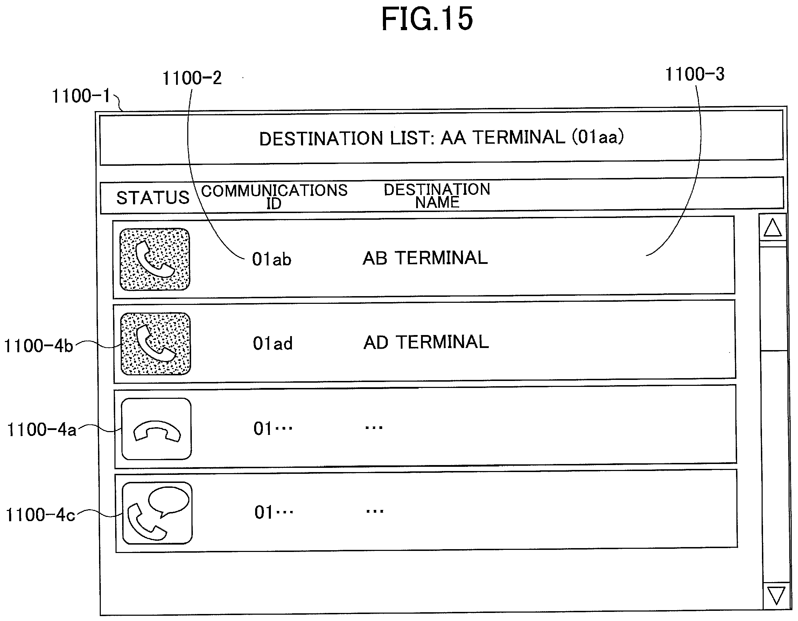

The creator 23 arranges the communications IDs and the destination names received in step S26 as well as arranging icons corresponding to the operating statuses received in step S26 to create image data of a destination list illustrated in FIG. 15 (step S27). Next, the display controller 24 displays a destination list P10 illustrated in FIG. 15 on the display 120aa (step S28). FIG. 15 is a diagram illustrating a display example of the destination list. The destination list illustrated in FIG. 15 includes communications IDs 1100-2 and destination names 1100-3 of the destination candidates, icons 1100-4a to 1100-4c reflecting the operating information, and the like in a destination list frame 1100-1. In this case, when the operating status is "OFFLINE", the creator 23 assigns an OFFLINE icon 1100-4a. When the operating status is "ONLINE (COMMUNICATIONS AVAILABLE)", the creator 23 assigns a COMMUNICATIONS AVAILABLE icon 1100-4b. When the operating status is "ONLINE (COMMUNICATIONS IN PROGRESS)", the creator 23 assigns a COMMUNICATIONS IN PROGRESS icon 1100-4c.

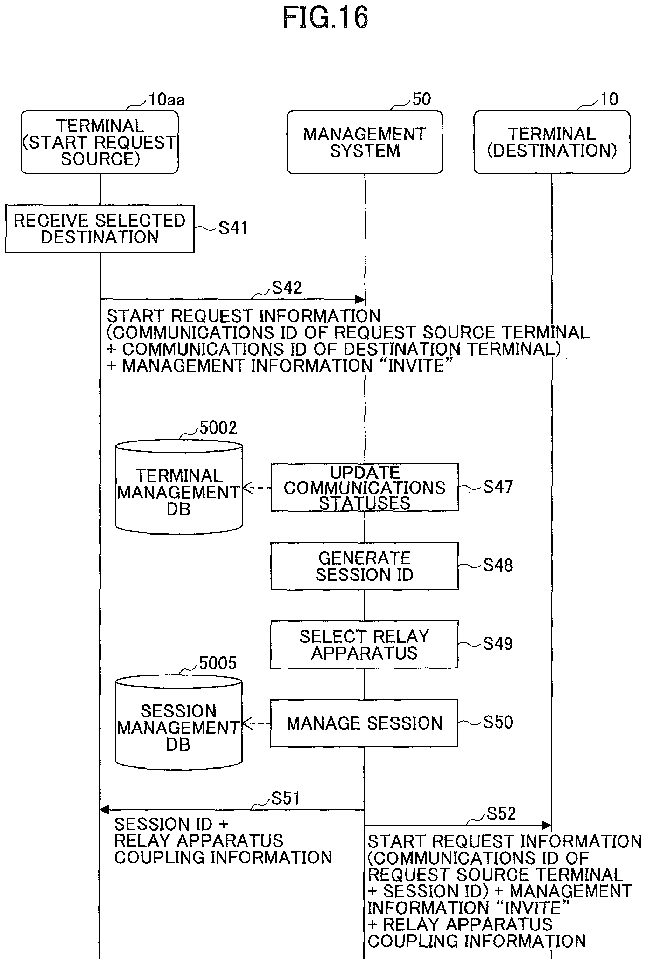

Next, a description is given of a process in which the terminal 10aa requests starting communications with another terminal 10 with reference to FIG. 16. FIG. 16 is a sequence diagram illustrating a process of requesting starting communications. FIG. 16 illustrates a process of transmitting and receiving various types of management information via the management information session sei.

The user of the terminal 10aa may be able to request starting communications by selecting at least one of the destination candidates having the operating status being "ONLINE (COMMUNICATION AVAILABLE)" displayed in the destination list frame 1100-1. When the user of the terminal 10aa selects a desired destination candidate and presses the operations button 108, the function executor 25 receives the selected destination candidate (step S41). The transmitter-receiver 21 of the terminal 10aa transmits start request information including the communications ID "01aa" of the start request source terminal 10aa, the communications ID of the destination candidate, and management information "Invite" to the management system 50 (step S42). Note that the management information "Invite" indicates a communications start request without having limitations to attendance that is automatically selected by the process of the transmitter-receiver 21 based on the videoconferencing application 1031. The transmitter-receiver 51 of the management system 50 receives the start request information accordingly.

The manager 53 subsequently updates the communications status of the terminal 10aa as the start request source and the communications status of the destination terminal 10 (step S47). In this case, the manager 53 searches the status change management table (see FIG. 9B) by the management information "Invite" transmitted from the start request source terminal 10aa as a search key, and reads status information before change and status information after the change for each of the terminal information pieces. The manager 53 changes respective communications statuses of the terminals 10 based on the read terminal information, status information before the change and status information after the change. For example, the manager 53 changes the communications status of the start request source terminal 10aa from "None" indicated by the status information before the change to "Calling" indicated by the status information after the change. Similarly, the manager 53 changes the communications status of the destination terminal 10 from "None" indicated by the status information before the change to "Ringing" indicated by the status information after the change. The manager 53 changes, as part of step S47, the operating statuses associated with the respective communications IDs of the start request source terminal 10aa and the destination terminal 10 to the "ONLINE (COMMNICATIONS IN PROGRESS)" in the terminal management table.

The session controller 58 subsequently generates a session ID "se1" for identifying a session (content data session sed) to transmit content data between the start request source terminal 10aa and the selected destination terminal 10 (step S48).

Subsequently, the session controller 58 of the management system 50 selects the relay apparatus 30 for relaying the content data via the content data session sed between the start request terminal 10aa and the destination terminal 10 (step S49). In this embodiment, it is assumed that the relay apparatus 30a is selected by the session controller 58.

When the selection of the relay apparatus 30 has been completed, the storage-reader 59 manages the session ID generated in step S48 in association with the relay apparatus ID "111a" of the relay apparatus 30a selected in step S49, the communications ID "01aa" of the start request source terminal 10aa as the communications ID of an attending terminal attending the session, and the communications ID of the destination terminal 10 in the session management table (see FIG. 8E) (step S50).

Subsequently, the transmitter-receiver 51 transmits the session ID generated in step S48, and relay apparatus coupling information for use in coupling to the relay apparatus 30a selected in step S49 to the start request terminal 10aa via the communications network 2 (step S51). The relay apparatus coupling information may include an IP address "1.2.1.2" of the relay apparatus 30a, authentication information, a port number, and the like.

Subsequently, the transmitter-receiver 51 transmits the management information "Invite" indicating the communications start request without having limitations to attendance, the start request information including the session ID "se1" generated in step S48, and the relay apparatus coupling information for use in coupling to the relay apparatus 30a to the destination terminal 10 (step S52).

The above-described process may allow the start request source terminal 10aa and the destination terminal 10 to detect the relay apparatus coupling information for use in coupling to the relay apparatus 30a that relays the content data in the session having the session ID "se1".

The destination terminal 10 that has received the start request information transmits management information "Accept" representing approval of the start request to the management system 50. After receiving the approval of the start request, the request source terminal 10aa and the destination terminal 10 transmit management information "Join" for requesting coupling to the relay apparatus 30a. When the transmitter-receiver 51 of the management system 50 receives the management information "Join", the session controller 58 controls establishment of the content data session sed between the start request source terminal 10aa and the destination terminal 10.

The manager 53 of the management system 50 updates the communications statuses of the start request source terminal 10aa and the destination terminal 10 managed by the terminal management table (see FIG. 8B) based on the received management information every time the management system 50 receives the management information from the terminals 10. The process of managing the operating statuses and the communications statuses of the terminals 10 is similar to the process in step S47, and a duplicated description is thus omitted from the description. Note that the manager 53 updates the communications statuses in accordance with status transition rules illustrated in FIG. 10A to change the communications statuses of the start request source terminal 10aa and the terminal 10 to "Busy" in the terminal management table.

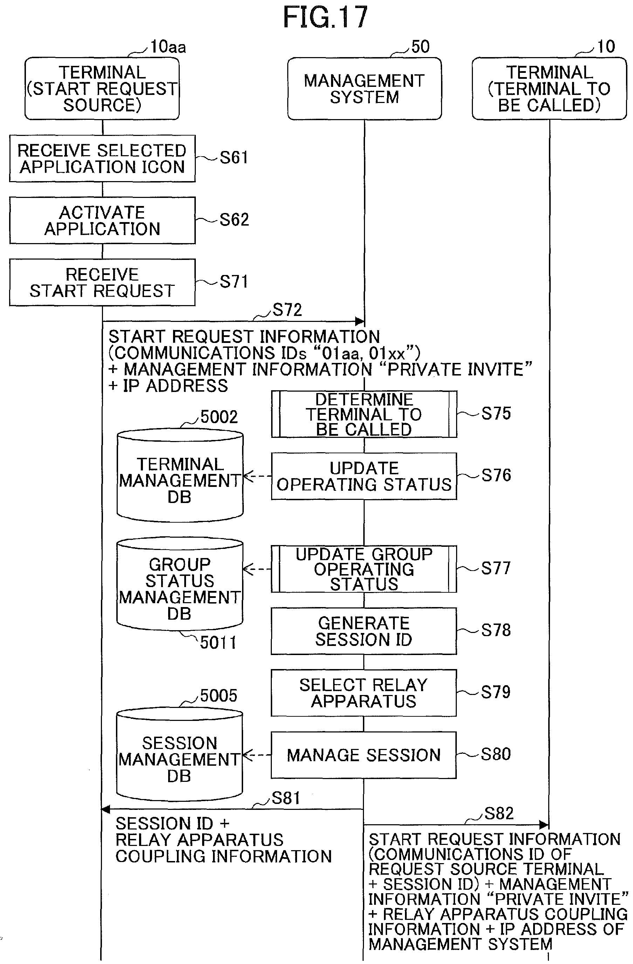

In the above example, the applications icon 141 is selected in the terminal 10aa. The following illustrates, with reference to FIG. 17, an example in which the application icon 142 is selected. FIG. 17 is a sequence diagram illustrating a process of requesting starting communications.

When the user operates operations buttons (108a to 108e) to select a desired one of the application icons illustrated in FIG. 13 that indicates a reception application 1032, the operation input receiver 12 of the terminal 10aa receives the application icon 142 selected by the user (step S61).

Subsequently, the operation input receiver 12 of the apparatus controller 1050 transmits an activation request to an activator 22 implemented by the selected reception application 1032 to activate the call controller 1060 corresponding to the reception application 1032 (step S62). Note that the process before step S62 is a process performed by the apparatus controller 1050; however, a process subsequent to step S62 is performed by the call controller 1060 implemented by the activation of the reception application 1032.

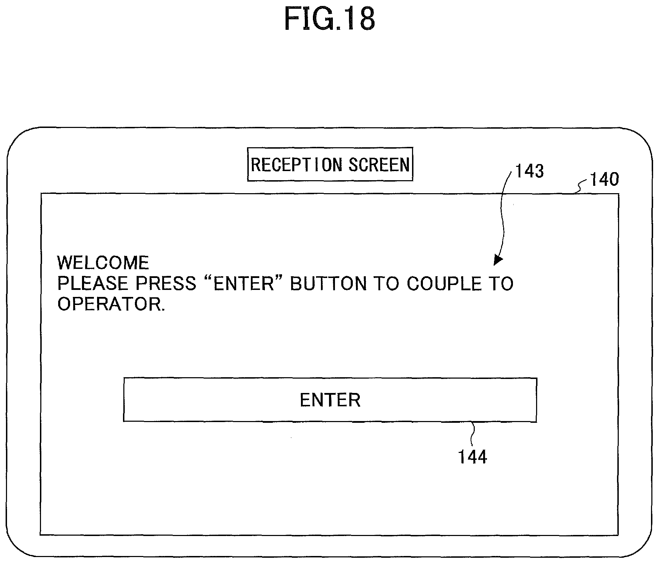

The display controller 24 of the call controller 1060 subsequently displays a reception screen on the display 120aa for receiving the start of the communications with a call center. FIG. 18 is a diagram illustrating an example of the reception screen 140a. The reception screen 140a displays a message 143 that encourages the user of the terminal 10aa to start communications with the terminal 10 of the call center and a button 144 for receiving the start of the communications. The display controller 24 corresponding to each of the applications displays a message in accordance with an appropriate one of purposes or the user interfaces (see FIGS. 15 and 18). When selecting the reception application 1032, the user may skip the operation of selecting a destination because the display of the user interface for selecting destinations is omitted. The management system 50 may omit the process of transmitting the destination list information to the terminal 10.

When the user of the terminal 10aa subsequently presses a button 144 in the reception screen 140a of FIG. 18, the function executor 25 receives a communications start request (step S71). The transmitter-receiver 21 of the terminal 10aa transmits start request information including the communications ID "01aa" of the start request source terminal 10aa, the communications ID "01xx" of the destination candidate, and management information "Private Invite" together with the IP address of the start request source terminal 10aa to the management system 50 (step S72). Note that the communications ID "01xx" of the destination candidate serves as a group communications ID indicating the call center as the destination. The communications ID "01xx" of the destination candidate is automatically selected by the process of the transmitter-receiver 21 based on the reception application 1032. The management information "Private Invite" indicates a communications start request with limitations to attendance that is automatically selected by the process of the transmitter-receiver 21 based on the reception application 1032.

The session controller 58 of the management system 50 determines a calling terminal 10 (a terminal to be called) from the terminals 10 constituting a group identified by the group communications ID "01xx" (step S75).

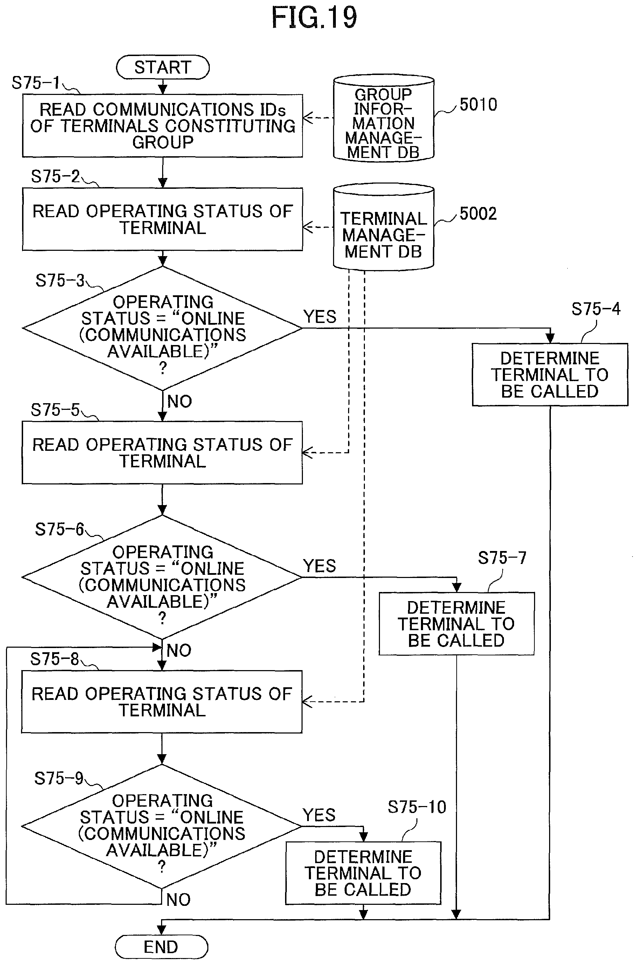

The process of step S75 is illustrated with reference to FIG. 19. FIG. 19 is a flowchart illustrating a process of determining a terminal to be called. The storage-reader 59 searches the group information management table (see FIG. 9C) by the group communications ID "01xx" of the destination candidate included in the start request information as a search key to read the communications IDs included in the group (step S75-1). The following description is based on the assumption in which the communications IDs ("01da" and "01db") are read.

The manager 53 subsequently searches the terminal management table (see FIG. 8B) by any one (e.g., "01da") of the communications IDs ("01da" and "01db") read in step S75-1 as a search key to read the operating status of the corresponding terminal (step S75-2).

The session controller 58 subsequently determines whether the operating status read in step S75-2 is "ONLINE (COMMUNICATIONS AVAILABLE)" (step S75-3). When the session controller 58 determines that the operating status read in step S75-2 is "ONLINE (COMMUNICATIONS AVAILABLE)", the session controller 58 determines a terminal identified by the communications ID used as the search key in step S75-2 as a terminal (e.g., the terminal 10da) to be called (step S75-4).

When the session controller 58 determines that the operating status read in step S75-2 is not "ONLINE (COMMUNICATIONS AVAILABLE)" (step S75-3), the manager 53 searches the terminal management table (see FIG. 8B) by the second one (e.g., "01db") of the communications IDs ("01da" and "01db") read in step S75-1 as a search key to read the operating status of the corresponding terminal (step S75-5).

The session controller 58 subsequently determines whether the operating status read in step S75-5 is "ONLINE (COMMUNICATIONS AVAILABLE)" (step S75-6). When the session controller 58 determines that the operating status read in step S75-5 is "ONLINE (COMMUNICATIONS AVAILABLE)", the session controller 58 determines a terminal identified by the communications ID used as the search key in step S75-5 as a terminal (e.g., the terminal 10db) to be called (step S75-7). Note that when a group includes three or more terminals, the process of reading the operating status (see step S75-2 and step S75-5), and the process of determining the operating status (see step S75-3 and step S75-6) may be repeated in accordance with the number of terminals constituting the group.

When the session controller 58 determines that the operating status read in step S75-5 is not "ONLINE (COMMUNICATIONS AVAILABLE)" (step S75-6), the manager 53 searches the terminal management table (see FIG. 8B) by the communications IDs ("01da" and "01db") read in step S75-1 as search keys to periodically read the operating statuses of the corresponding terminals (step S75-8).

The session controller 58 determines whether the operating status read in step S75-8 is updated from "ONLINE (COMMUNICATIONS IN PROGRESS)" or "OFFLINE" to "ONLINE (COMMUNICATIONS AVAILABLE)" (step S75-9). When the session controller 58 determines that the operating status read in step S75-8 is updated from "ONLINE (COMMUNICATIONS IN PROGRESS)" or "OFFLINE" to "ONLINE (COMMUNICATIONS AVAILABLE)" (step S75-9), the session controller 58 selects the terminal having the updated the operating status "ONLINE (COMMUNICATIONS AVAILABLE)" as a terminal to be called (step S75-10). Note that when the session controller 58 determines that the operating status read in step S75-8 is not updated from "ONLINE (COMMUNICATIONS IN PROGRESS)" or "OFFLINE" to "ONLINE (COMMUNICATIONS AVAILABLE)" (NO in step S75-9), the process in step S75-8 is repeated. Note that when any one of the communications IDs read in step S75-8 being "OFFLINE" is repeated predetermined times or is repeated for a predetermined time, the process of FIG. 17 may be terminated because no service from the call center may be provided.

The manager 53 subsequently changes the communications status "01aa" of the start request source terminal 10aa and the communications status corresponding to the communications ID of the terminal to be called as the destination (step S76). In this case, the manager 53 searches the status change management table (see FIG. 9B) by the management information "Private Invite" transmitted from the start request source terminal 10aa as a search key, and reads status information before change and status information after the change for each of the terminal information pieces. The manager 53 updates respective communications statuses of the terminals 10 based on the read terminal information, status information before the change and status information after the change (step S76). In this case, the manager 53 changes the communications status of the start request source terminal 10aa from "None" indicated by the status information before the change to "Private Calling" indicated by the status information after the change. Similarly, the manager 53 changes the communications status of the terminal to be called from "None" indicated by the status information before the change to "Private Ringing" indicated by the status information after the change. The manager 53 changes, as part of step S76, the operating statuses associated with the respective communications IDs of the start request source terminal 10aa and the terminal to be called to the "ONLINE (COMMNICATIONS IN PROGRESS)" in the terminal management table.

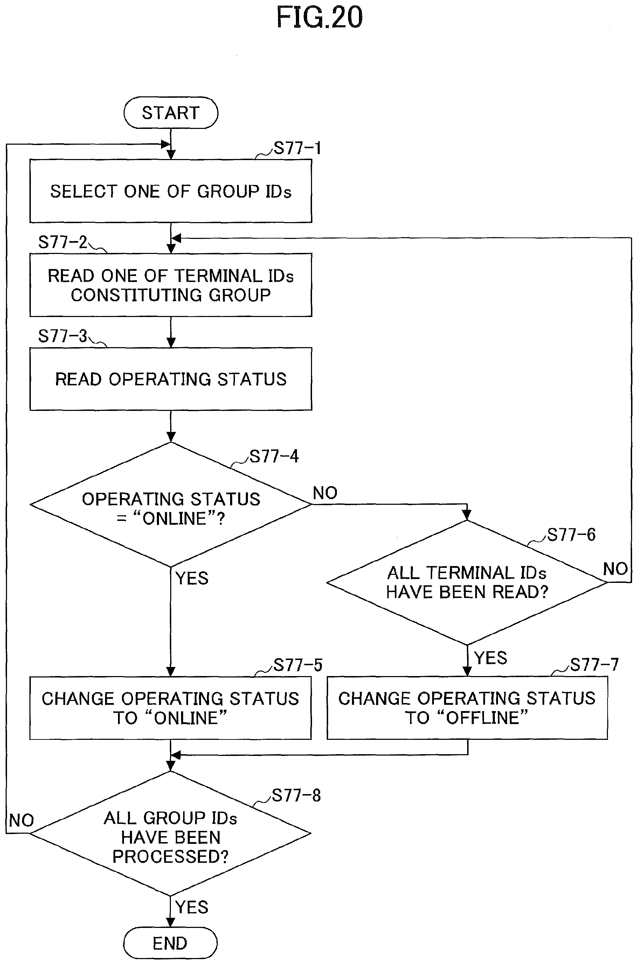

The manager 53 subsequently updates an operating status of the group managed by the group status management table (see FIG. 9D) (step S77). The following illustrates a process of updating an operating status of a group with reference to FIG. 20. FIG. 20 is a flowchart illustrating a process of updating an operating status of a group. The process may be executed at any timing such as when the operating status of the terminal 10 constituting the group is changed. Note that the timing of updating the operating status of the group is not particularly specified; however, the operating status of the group may be updated at predetermined intervals.

The storage-reader 59 refers to the group information management table of FIG. 9C to select one of the group IDs (step S77-1). The storage-reader 59 subsequently reads one of the communications IDs constituting the group selected in step S77-1 (step S77-2). The manager 53 refers to the terminal management table (see FIG. 8B) to read an operating status corresponding to the communications ID read in step S77-2 (step S77-3).

The manager 53 determines whether the operating status read in step S77-2 is "ONLINE (COMMUNICATIONS AVAILABLE)" or "ONLINE (COMMNICATIONS IN PROGRESS)" (step S77-4). When the manager 53 determines that the operating status read in step S77-2 is "ONLINE (COMMUNICATIONS AVAILABLE)" or "ONLINE (COMMNICATIONS IN PROGRESS)", the manager 53 determines the operating status of the group ID selected in step S77-1 to be "ONLINE", and stores information about the operating status being "ONLINE" in the group status management table of FIG. 9D.

When the manager 53 determines that the operating status read in step S77-2 is not "ONLINE (COMMUNICATIONS AVAILABLE)" or "ONLINE (COMMNICATIONS IN PROGRESS)" in step S77-4, the manager 53 determines whether the communications IDs of all the terminals 10 included in the group selected in step S77-1 have been read (step S77-6). When the manager 53 determines that the communications IDs of all the terminals 10 included in the group selected in step S77-1 have been read in step S77-6, the manager 53 determines the operating status of the group ID selected in step S77-1 is "OFFLINE", and stores information about the operating status being "OFFLINE" in the group status management table of FIG. 9D (step S77-7). When the manager 53 determines that not all the communications IDs of the terminals 10 included in the group selected in step S77-1 have been read in step S77-6, the manager 53 executes a process in step S77-2.

When the manager 53 determines that all the group IDs managed in the group information management table have been selected and processed, the manager 53 ends the process of FIG. 20. When the manager 53 determines that not all the group IDs managed in the group information management table have been selected and processed yet, the manager 53 returns to step S77-1 to select a next group ID and execute the process.

The above-described process enables the management of the operating status of the group in a manner similar to the operating status of the terminal 10. Hence, each of the start request source terminals 10 does not need to determine whether the destination is the terminal 10 or the group.

The management system 50 subsequently controls establishment of a content data session between the terminal 10aa and the terminal to be called (terminal 10) (steps S78 to S82). The process with the control is similar to the process in steps S48 to S52, and a duplicated illustration is thus omitted from the description. Note that the manager 53 updates the communications statuses in accordance with status transition rules illustrated in FIG. 10B to change the communications statuses of the start request source terminal 10aa and the terminal 10 to "Private Busy" in the terminal management table.

Note that during the videoconferencing, the terminal 10 attending the videoconferencing, that is, the terminal 10 attending the established session may display on the display 120 whether the videoconferencing uses a session with attendance limitation or a session without the attendance limitation so as to allow the attendees of the videoconferencing to recognize whether there is attendance limitation to the videoconferencing.

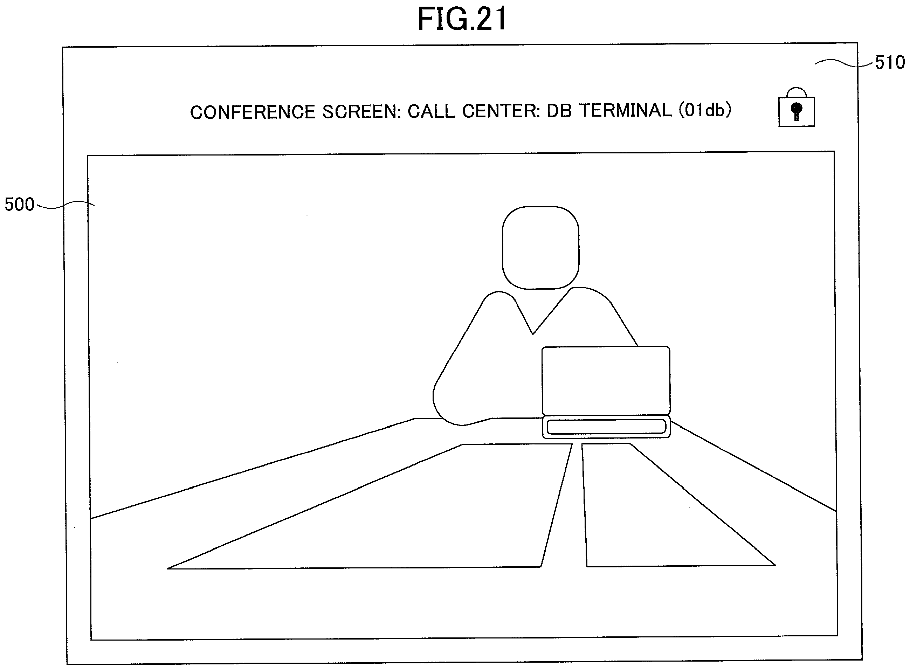

Note that a description is given of a display example by the terminal 10 in association with the videoconferencing with or without attendance limitation with reference to FIG. 21. FIG. 21 illustrates an example of a screen displayed on the display 120 while the terminal 10 attends the videoconferencing with another terminal. The display controller 13 of the terminal 10 outputs an auxiliary area 510 for displaying detailed information in association with the videoconferencing in addition to a video 500 imaged by a counterpart terminal 10.

The display controller 13 of the terminal 10 may output information representing whether the videoconferencing that the terminal 10 currently attends has attendance limitation based on the management information transmitted from the management system 50 at a desired location within the auxiliary area 510. For example, when the user starts the videoconferencing with attendance limitation and a session relating to the videoconferencing with attendance limitation has been established, the display controller 13 of the terminal 10 may display a lock-shaped icon in the auxiliary area 510. Accordingly, the user of the terminal 10 may be able to check whether the videoconferencing that the terminal 10 itself attends has the attendance limitation based on the presence or absence of the display of the icon.

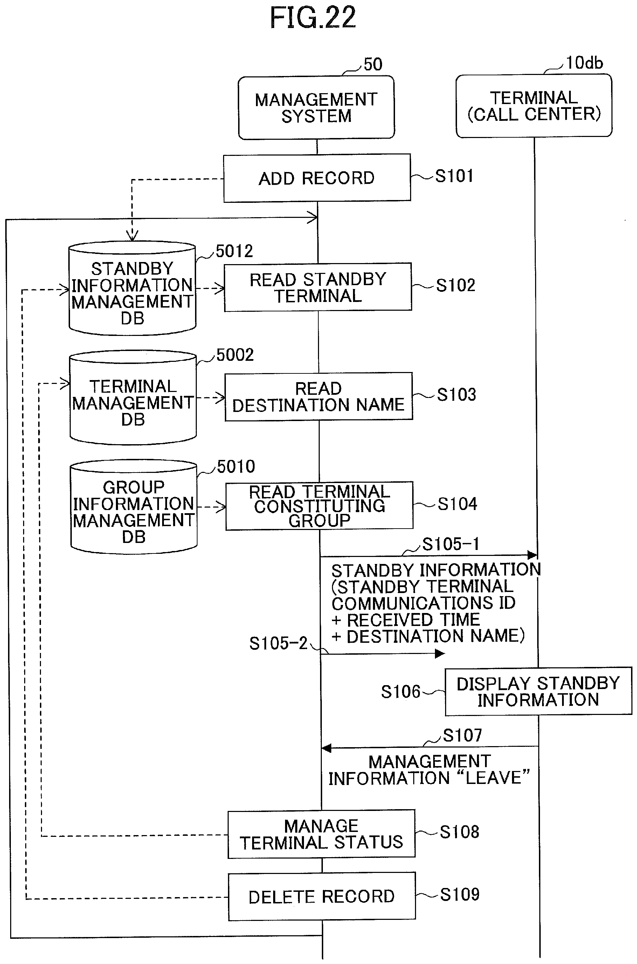

Next, a description is given, with reference to FIG. 22, of a case where communications are unable to start due to all the terminals 10 in the call center being currently engaged in communications when the terminal 10aa requests starting the communications with the call center using the reception application 1032. FIG. 22 is a flowchart illustrating a process of reporting a standby status.

When all the terminals 10 in the call center are currently engaged in communications, that is, when the session controller 58 determines that the operating status read in step S75-5 is not "ONLINE (COMMUNICATIONS AVAILABLE)" (No in step S75-6), the storage-reader 59 of the management system 50 adds a record in association with the group communications ID "01xx" of the group, the communications ID "01aa" of the start request source terminal 10aa, and received time at which the management system 50 has received the start request in the standby information management table (see FIG. 9E) (step S101).

After the record is added, the storage-reader 59 reads the communications ID and the received time of each of the standby terminals in association with the group ID "01xx" of the destination in the standby information management table (see FIG. 9E) (step S102). The storage-reader 59 searches the terminal management table (see FIG. 8B) by the communications IDs of the standby terminals read in step S102 as search keys to read the corresponding destination names (terminal names) (step S103). In addition, the storage-reader 59 searches the group information management table (see FIG. 9C) by the group communications ID "01xx" of the destination as a search key to read the communications IDs of the terminals included in the group (step S104).

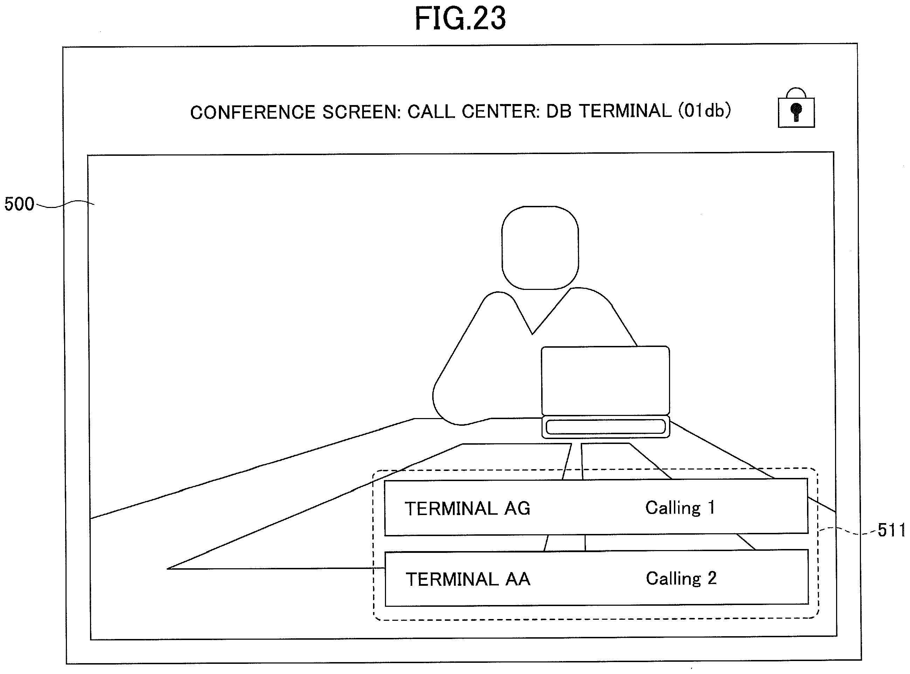

The transmitter-receiver 51 subsequently transmits to the terminals corresponding to the communications IDs read in step S104 the communications IDs of the standby terminals, the received time at which the management system 50 has received the start request, and standby information including destination names of the standby terminals read in step S103, for each of the standby terminals read in step S102 (steps S105-1, S105-2, ...). When the transmitter-receiver 11 of the terminal 10 at the call center receives the standby information, the display controller 24 displays the destination names of the standby terminals included in the standby information on the conference screen of the display 120 in the order of received time (step S106). Note that FIG. 23 is a diagram illustrating a display example of the screen of the display 120db in step S106. The display controller 24 of the terminal 10 at the call center displays, in addition to the video 500 imaged by the terminal 10 of the current communications counterpart, a message 511 representing a standby terminal based on the standby information. The terminal 10 at the call center may be able to detect standby statuses.

Next, when the terminal 10db at the call center ends the communications, the transmitter-receiver 21 of the terminal 10db transmits management information "Leave" indicating the end of the communications to the management system 50 (step S107). In the management system 50 that has received the management information "Leave", the session controller 58 executes ending control on the content data session sed between the terminal 10db and the terminal 10 of the current communications counterpart. The manager 53 updates the operating status of the terminal 10db from "ONLINE (COMMNICATIONS IN PROGRESS)" to "ONLINE (COMMUNICATIONS AVAILABLE)", and the communications status of the terminal 10db from "Private Busy" to "None" (see FIG. 10B) (step S108). The terminal 10db may become a new terminal to be called with respect to the standby terminal in accordance with an update status of the operating status (see step S75-10). When the terminal to be called is determined, the session controller 58 of the management system 50 controls establishment of a content data session between the standby terminal 10 and the terminal db to be called (see steps S78 to S82).

When the content data session between the standby terminal 10 and the terminal db to be called is established, the storage-reader 59 deletes a record including the communications ID of the standby terminal 10 that has started the communications with the terminal db to be called from the standby information management table (see FIG. 9E) (step S109). After the process of step S109 has completed, the management system 50 repeats steps subsequent to step S102. The management system 50 may thus be able to report the updated standby information to the terminal at the call center.

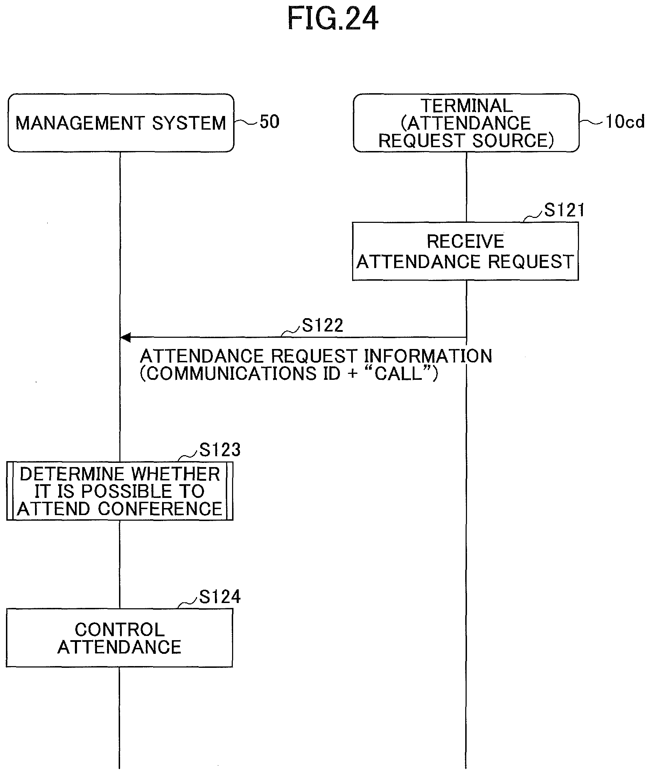

Next, a description is given, with reference to FIG. 24, of a process of a case in which after the establishment of the content data session sed between the start request source terminal 10aa and the destination terminal 10db, a terminal 10cd requests to attend the content data session sed. FIG. 24 is a sequence diagram illustrating a process of joining a content data session sed. FIG. 24 illustrates a process of transmitting and receiving various types of management information via the management information session sei.

The destination list is displayed on the display 120cd of the terminal 10cd by the process illustrated with reference to FIG. 14. The user of the attendance request source terminal 10cd operates the operations button 108 to select a terminal (a terminal 10aa in this case) having the operating status "ONLINE (COMMUNICATIONS IN PROGRESS)". In response to the selection, the operation input receiver 12 receives the attendance request for attending the already established content data session (step S121).

The transmitter-receiver 11 of the terminal 10cd transmits attendance request information including the communications ID "01cd" of the own terminal 10cd, the communications ID "01aa" of the selected terminal 10aa, and the management information "Call" indicating a request for attending the content data session to the management system 50 (step S122).

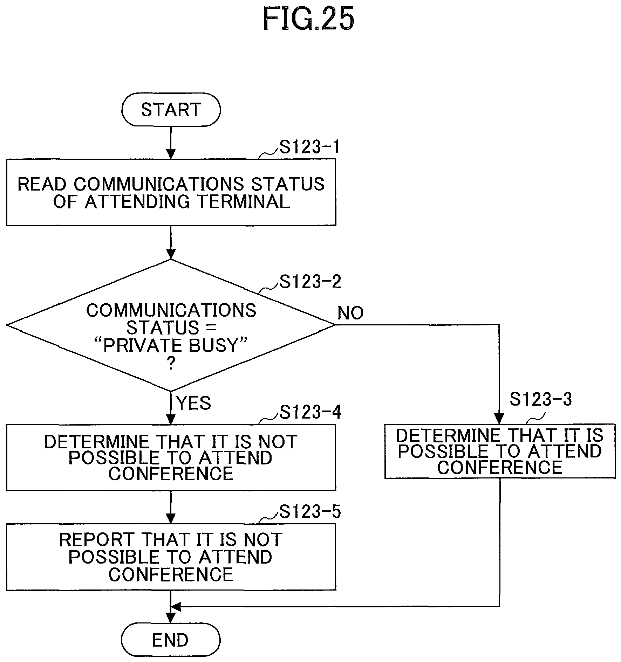

The management system 50 that has received the attendance request information determines whether to continue a process of coupling the attendance request source terminal 10cd and the terminals (10aa and 10db) currently attending the content data session sed (step S123). The process of step S123 is illustrated in more detail with reference to FIG. 25. FIG. 25 is a flowchart illustrating a determination process of determining the attendance based on a communications status.

The storage-reader 59 searches the terminal management table (see FIG. B) by the communications ID "01aa" of the terminal 10aa currently attending the session as a search key to read the communications status of the corresponding terminal (step S123-1). The session controller 58 subsequently determines whether the read communications status is "Private Busy" (step S123-2). When the read communications status is not "Private Busy", the session controller 58 determines that it is possible for the attendance request source terminal 10cd to attend the session, and ends the process (step S123-3).

On the other hand, when the read communications status is "Private Busy", the session controller 58 determines that it is not possible for the attendance request source terminal 10cd to attend the session (step S123-4). The transmitter-receiver 11 subsequently transmits a report informing that it is not possible to attend the session to the attendance request source terminal 10cd (step S123-5). Note that the attendance request source terminal 10cd that has received a report informing that it is not possible to attend the session displays the report on the display 120.

When the session controller 58 determines that it is possible for the attendance request source terminal 10 to attend the session, the management system 50 controls causing the terminal 10cd to attend the content data transmission session between the terminals (10aa and 10cd) (step S124). An example of this process includes transmitting relay apparatus coupling information for coupling the terminal 10cd to the relay apparatus 30a to which the terminals (10aa and 10cd) are coupled. An example of the control method for allowing a terminal to attend a session includes, but is not limited to, the method illustrated in Japanese Unexamined Patent Application Publication No. 2012-50063.

According to the embodiment, when the reception application 1032 is selected, the content data session sed with attendance limitation is established. This is because the destination group is the call center (see FIG. 9C) and it is not assumed for the third party to attend the established session.

### SUPPLEMENTARY EXPLANATION

The management system 50 and the program providing system 90 in the embodiments described above may be constructed by a single computer, or may be constructed by multiple computers to which components (functions and units) of the management system 50 and the program providing system 90 are separately assigned. In addition, when the program providing system 90 is constructed by a single computer, the programs transmitted by the program providing system 90 may be divided into multiple modules, or the programs may be transmitted without being divided into multiple modules. Further, when the program providing system 90 is constructed by multiple computers, the programs may be divided into multiple modules and the multiple modules of the programs are separately assigned to the computers, such that the multiple modules of the programs may be transmitted from the respective computers.

Any of the recording medium storing the terminal program, the relay apparatus program and the communications management program of the communications system 1, the HD 204 storing the above-described programs, and the program providing system 90 provided with the HD 204 are used for providing the terminal program, the relay apparatus program and the communications management program to users domestically or internationally as program products.

Further, the above-described communications system 1 may manage, but not limited to, the IP addresses of the terminals in the terminal management table illustrated in FIG. 8B. The communications system 1 may manage fully qualified domain names (FQDN) of the terminals in a case where terminal identification information for identifying the terminals 10 over the communications network 2 is used. In this case, the IP address corresponding to FQDN is acquired by a known domain name system (DNS) server.

In the communications system 1, the "teleconferencing" and "video conferencing" are interchangeably used.

Further, the communications system 1 in the above embodiment illustrates the videoconferencing system; however, the communications system 1 is not limited to the videoconferencing system. The communications system 1 may be a car navigation system. In this case, one of the terminals 10 corresponds to a car navigation apparatus installed on a vehicle, and the other one of the terminals 10 corresponds to a management system or a management terminal in a management center that manages navigation of the car, or another car navigation apparatus installed on another vehicle.

In addition, the communications system 1 may be an audio conferencing system, or a personal computer (PC) screen sharing system. The communications system 1 may be a communications system of the Internet protocol (IP) phone, the internet phone, or a mobile phone. In this case, the terminal 10 corresponds to the mobile phone apparatus.

The content data may include sound data generated pulse sound, heartbeats and the like generated inside the body, or data representing internal body information such as image data or coordinate data representing electrocardiogram waveforms or temperature changes. The communications system 1 may thus be used as a remote medical system.

Moreover, in the above-described embodiments, the image data and sound data are described as examples of content data. However, the content data are not limited to the image data and sound data. The content data may be tactile data (touch data). In this case, the sense of touch experienced by a user via one terminal is transmitted to the other terminal. Further, the content data may be olfactory data (smell data). In this case, the sense of smell (odor) experienced by one terminal is transmitted to the other terminal. Moreover, the content data may at least one of the image data, the sound data, the tactile data, the olfactory data, and the like.

Note that each of the terminals 10 may be used for communications within the same room, communications between indoor and outdoor, and communications between outdoor and outdoor in addition to communications between two or more offices, and communications between different rooms within the same office. When the terminals 10 used outdoor may perform communications via wireless communications such as a mobile communications network. Further, the above-described embodiment has illustrated an example of the communications system 1 that implements the teleconferencing. However, the example implemented by the communications system 1 is not limited to the teleconferencing, and the example implemented by the communications system 1 may be general conversations between humans such as family members or friends, or one-way information presentation.

### EFFECTS OF EMBODIMENTS

The destination list management DB 5004 (an example of a manager) of the management system 50 (an example of a control system) is configured to manage the communications ID of the terminal 10 (an example of a first destination) that serves as a communications destination with respect to the terminal 10aa. The group information management DB 5010 (an example of the manager) of the management system 50 is configured to manage the communications ID of the call center (an example of a second destination) that serves as a communications destination with respect to the terminal 10aa. Two or more communications destinations with respect to the terminal 10aa may thus be managed by the above-described managers. When the terminal 10aa transmits start request information (an example of a start request) to the management system 50 based on the videoconferencing application (an example of a first application), the session controller 58 executes control in association with the start communications between the terminal 10aa and the first destination. When the terminal 10aa transmits start request information (an example of the start request) to the management system 50 based on the videoconferencing application (an example of a second application), the session controller 58 executes control in association with the start communications between the terminal 10aa and the second destination. The communications system 1 according to the embodiment may be able to reduce the number of destination candidates in accordance with a selected one of the applications, which may reduce burdens on the terminal 10 at the start of the communications process including selecting a destination from the destination candidates.

Note that the first destination for the terminal 10aa includes other terminals (10ab, 10ad, ...) serving as communications counterparts to the terminal 10aa. On the other hand, the second destination for the terminal 10aa indicates a call center serving as a group constituting multiple terminals (10da, 10db, ...). As a result, the user of the terminal 10aa may simply select one of the applications based on whether the destination terminal 10 is specified when starting the communications, thereby making it easy for the user to select the appropriate one of the applications.

In the communications system 1 according to the embodiment, the terminals (10ab, 10ad, ...) constituting the first destination for the terminal 10aa differ from the terminals (10da, 10db, ...) constituting the second destination for the terminal 10aa. In this case, the number of terminals 10 serving as destination candidates may be reduced when the user selects one of the applications by differentiating the terminals (10ab, 10ad, ...) constituting the first destination from the terminals (10da, 10db, ...) constituting the second destination.

According to the embodiments, the first destination for the terminal 10aa includes one or more terminals (10ab, 10ad, ...) identified by the communications IDs "01ab, 01ad, ...". On the other hand, the second destination for the terminal 10aa includes one destination (the call center) identified by the communications ID "01xx". In the above example, since the number of second destinations is reduced to one, the process of selecting a destination no longer required when the terminal 10aa selects the reception application 1032.

The transmitter-receiver 51 of the management system 50 transmits the destination list information (an example of destination information indicating the first destination) including the communications IDs "01ab, 01ad, ..." of one or more terminals (10ab, 10ad, ...). to the terminal 10aa in accordance with the destination list request based on the videoconferencing application 1031 selected by the terminal 10aa. The transmitter-receiver 51 (an example of the start request receiver) receives the communications start request for starting communications with at least one of the terminals (10ab, 10ad, ...). The session controller 58 executes control in association with the start of the communications between the terminal 10aa and at least one of the terminals 10. According to the embodiments, a process of selecting a destination from the destination list to start communications and a process of starting communications without selecting a destination may be implemented by one communications system 1.

The session controller 58 of the management system 50 (an example of an attendance controller) controls whether to allow another terminal 10 to attend the content data session sed (an example of a communications session) between the terminals 10. In this case, the session controller 58 control attendance of another terminal 10 at the content data session sed already started between the terminal 10aa and the first destination while rejecting the terminal 10 to attend the content data session sed already started between the terminal 10aa and the second destination. According to the embodiments, whether to allow another terminal 10 to attend the established content data session sed may be controlled in accordance with the applications activated on the terminal 10aa.

The terminal 10aa is installed with the videoconferencing application 1031 and the reception application 1032 that may be activated. The transmitter-receiver 21 (an example of a start requester) of the terminal 10aa transmits communications start request information for starting communications with the first destination to the management system 50 in accordance with the videoconferencing application 1031, and transmits communications start request information for starting communications with the second destination to the management system 50 in accordance with the reception application 1032. The communications system 1 according to the embodiments may be able to reduce the number of destination candidates in accordance with a selected one of the applications, which may reduce burdens on the terminal 10 at the start of the communications process including selecting a destination from the destination candidates.

The present application is based on and claims the benefit of priority of Japanese Priority Application No. 2014-148401, filed on July 22, 2014, and Japanese Priority Application No. 2015-082583, filed on April 14, 2015, the entire contents of which are hereby incorporated by reference.

### [Description of Reference Symbols]

- 10: terminal
- 11: transmitter-receiver
- 12: operation input receiver
- 13: display controller
- 19: storage-reader
- 21: transmitter-receiver
- 22: activator
- 23: creator
- 24: display controller
- 25: function executor
- 29: storage-reader
- 30: relay apparatus
- 50: management system
- 51: transmitter-receiver
- 52: authenticator
- 53: manager
- 58: session controller
- 59: storage-reader
- 5000: storage
- 5001: authentication management DB
- 5002: terminal management DB
- 5003: application availability management DB
- 5004: destination list management DB
- 5005: session management DB
- 5009: status change management DB
- 5010: group information management DB
- 5011: group status management DB
- 5012: standby information management DB

## Claims

1. A control system comprising:
a session controller configured to establish a communications session between a first communications terminal and communications terminals differing from the first communications terminal, wherein
the session controller controls establishment of a communications session between the first communications terminal and second communications terminals serving as a first destination in response to a communications start request for starting communications based on a first application running on the first communications terminal, and
the session controller controls establishment of a communications session between the first communications terminal and third communications terminals serving as a second destination in response to a communications start request for starting communications based on a second application running on the first communications terminal.

2. The control system according to claim 1, wherein
the first destination includes respective destinations indicating the second communications terminals, and
the second destination is a destination indicating a group composed of the third communications terminals.

3. The control system according to claim 1, wherein
the second communications terminals serving as the first destination differ from the third communications terminals included in the second destination.

4. The control system according to any one of claims 1 to 3, wherein
the first destination includes one or more destinations and the second destination includes one destination.

5. The control system according to claim 4, further comprising:
a destination information transmitter configured to transmit destination information indicating the first destination including the one or more destinations to the first communications terminal, in response to the communications start request for starting communications based on the first application running on the first communications terminal; and
a start request receiver configured to receive from the first communications terminal a communications start request for starting communications with at least one destination among the destinations included in the first destination, wherein
the session controller controls establishment of a communications session between the first communications terminal and the at least one destination among the destinations included in the first destination.

6. The control system according to any one of claims 1 to 5, further comprising:
an attendance controller configured to control whether to allow a new communications terminal to attend the established communications session, wherein
the attendance controller allows the new communications terminal to attend the established session between the first communications terminal and the second communications terminals serving as the first destination, the new communications terminal differing from the first communications terminal and the second communications terminals attending the established session, and the attendance controller rejects the new terminal to attend the established session between the first communications terminal and the third communications terminals serving as the second destination, the new communications terminal differing from the first communications terminal and the third communications terminals attending the established session.

7. A communications terminal capable of activating a first application and a second application, the communications terminal comprising:
a start requester configured to transmit, to the control system according to any one of claims 1 to 6, a communication start request for starting communications with the second communications terminals serving as the first destination by a process of the first application, and transmit, to the control system, a communication start request for starting communications with the third communications terminals serving as the second destination by a process of the second application.

8. A communications system comprising:
the control system according to any one of claims 1 to 6; and
the first communications terminal.

9. A control method performed by a control system, the control system including a session controller to control establishment of a communications session between a first communications terminal and communications terminals differing from the first communications terminal, the control method comprising:
causing the control system to control establishment of a communications session between the first communications terminal and second communications terminals serving as a first destination in response to a communications start request for starting communications based on a first application running on the first communications terminal; and
causing the control system to control establishment of a communications session between the first communications terminal and third communications terminals serving as a second destination in response to a communications start request for starting communications based on a second application running on the first communications terminal.

10. The control method according to claim 9, comprising:
causing the first communications terminal capable of executing the first application and the second application to perform a process of transmitting a communication start request for starting communications with the second terminals serving as the first destination to the control system according to any one of claims 1 to 6 based on the first application; and
causing the first communications terminal to perform a process of transmitting a communication start request for starting communications with the third terminals serving as the second destination to the control system based on the second application.

11. A program for causing a computer to function as the control system according to any one of claims 1 to 6.

12. A program for causing a computer to function as the communications terminal according to claim 7.
